(19) Europäisches Patentamt
European Patent Office
Office européen des brevets

(11) EP 3 416 811 B1

(12) EUROPÄISCHE PATENTSCHRIFT

(45) Veröffentlichungstag und Bekanntmachung des Hinweises auf die Patenterteilung:
**04.08.2021 Patentblatt 2021/31**

(21) Anmeldenummer: **17708180.9**

(22) Anmeldetag: **16.02.2017**

(51) Int Cl.:
***B29C 67/00*** (2017.01) ***C09B 17/00*** (2006.01)
***C09B 21/00*** (2006.01) ***C08L 77/02*** (2006.01)
***C08L 77/06*** (2006.01)

(86) Internationale Anmeldenummer:
**PCT/EP2017/053500**

(87) Internationale Veröffentlichungsnummer:
**WO 2017/140779 (24.08.2017 Gazette 2017/34)**

# (54) ANTI-NUKLEIERUNGSMITTEL FÜR LASERSINTER-PULVER

ANTI NUCLEATING AGENTS FOR LASER INTER POWDER

AGENT ANTI-NUCLEATION POUR POUDRE DE FRITTAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2016 EP 16156537**

(43) Veröffentlichungstag der Anmeldung:
**26.12.2018 Patentblatt 2018/52**

(73) Patentinhaber: **BASF SE**
**67056 Ludwigshafen (DE)**

(72) Erfinder:
- **OSTERMANN, Rainer**
  **45665 Recklinghausen (DE)**
- **GABRIEL, Claus**
  **67056 Ludwigshafen (DE)**
- **MEIER, Thomas**
  **67056 Ludwigshafen (DE)**
- **GRAMLICH, Simon**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2012/041793**

- **LEONG ET AL: "Characterization of a poly-?-caprolactone polymeric drug delivery device built by selective laser sintering", BIO-MEDICAL MATERIALS AND ENGINEERING, IOS PRESS, AMSTERDAM, NL, Bd. 17, Nr. 3, 1. Januar 2007 (2007-01-01) , Seiten 147-157, XP009191159, ISSN: 0959-2989**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Formkörpern durch selektives Lasersintern eines Sinterpulvers (SP), das ein Polyamid (P) und 0,1 bis 5 Gew.-% mindestens eines Additivs (A) enthält. Die vorliegende Erfindung betrifft außerdem Formkörper, die Polyamid (P) und 0,1 bis 5 Gew.-% mindestens eines Additivs (A) enthalten. Weiterhin betrifft die vorliegende Erfindung die Herstellung von Sinterpulvern (SP) enthaltend Polyamid (P) und 0,1 bis 5 Gew.-% mindestens eines Additivs (A).

Die schnelle Bereitstellung von Prototypen ist eine in der jüngsten Zeit häufig gestellte Aufgabe. Ein Verfahren, das für dieses so genannte "Rapid Prototyping" besonders geeignet ist, ist das selektive Lasersintern. Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des Lasersinterns zur Herstellung von Formkörpern aus pulverförmigen Polymeren wird ausführlich in den Patentschriften US 6,136,948 und WO 96/06881 beschrieben.

Geeignete Polymere für das selektive Lasersinterverfahren sollten eine hohe Differenz zwischen der Schmelztemperatur und der Erstarrungstemperatur (Kristallisationstemperatur) aufweisen. Die EP 0911142 A1 beschreibt Polyamid-12-Pulver (PA 12) für die Herstellung von Formkörpern durch Laser-Sintern. Diese Pulver weisen eine Schmelztemperatur von 185 bis 189 °C, eine Schmelzenthalpie von 112 kJ/mol und eine Erstarrungstemperatur von 138 bis 143 °C auf. Nachteilig bei der Verwendung der in EP 0911142 A1 beschriebenen Polymere ist die Bildung von ausgedehnten Kristallitstrukturen beim Abkühlen der Formteile, da dadurch ein erhöhter Schwund oder sogar ein Verzug der Teile zu beobachten ist. Durch diesen Verzug ist eine Verwendung oder Weiterverarbeitung der so erhaltenen Bauteile erschwert. Der Verzug kann bereits während der Herstellung der Formteile so stark sein, dass ein weiterer Schichtauftrag nicht möglich ist und der Herstellungsprozess abgebrochen werden muss. Nachteilig ist außerdem, dass das gemäß EP 0911142 A1 eingesetzte Polyamid-12-Pulver nur schlecht wiederverwendet werden kann. Während des Lasersinterns wird nur ein Teil des Polyamid 12-Pulvers aufgeschmolzen. Das nicht aufgeschmolzene Pulver sollte idealerweise wiederverwendet werden. Allerdings nimmt die Fließfähigkeit der Schmelze des Polyamid-12-Pulvers mit zunehmender Zahl von Laser-Sinter-Zyklen ab und die Schmelzviskosität nimmt zu. Dies erschwert eine Wiederverwendung des Polyamid-12-Pulvers und macht das in EP 0911142 A1 beschriebene Verfahren aufgrund des hohen Polyamid-12-Pulver-Verbrauchs teuer.

WO 2012/041793 beschreibt eine Polymerzusammensetzung, die mindestens 40 Gew.-% Polyamid 410 enthält, und deren Verwendung in einem Lasersinterprozess. Die Polymerzusammensetzung kann zudem Additive enthalten, wie beispielsweise Nigrosin.

US 6,395,809 B1 offenbart die Verwendung von wasserunlöslichem Nigrosinpulver in einem teilkristallinen Polymer, das Polyamid, Polyethylenterephthalat, Polybutylenterephthalat oder Polyphenylensulfid enthält. Nigrosin kann dabei einerseits als Farbstoff eingesetzt werden, andererseits auch, um die Kristallisationstemperatur des Polymers zu senken. Die wasserunlöslichen Nigrosine werden ausgehend von kommerziell erhältlichen Nigrosinen durch Behandlung mit Schwefel- und/oder Phosphorsäure hergestellt. Bevorzugt werden 20 bis 40 Gew.-% Nigrosin eingesetzt, um Produkte mit besonders hoher Farbdichte zu erhalten. Nachteilig bei den eingesetzten wasserunlöslichen Nigrosinen ist der zusätzliche Verfahrensschritt, bei dem die kommerziell erhältlichen Nigrosine mit Schwefel- und/oder Phosphorsäure zu den wasserunlöslichen Nigrosinen umgesetzt werden müssen.

Die Aufgabe der vorliegenden Erfindung ist es, ein Verfahren zur Herstellung von Formkörpern durch selektives Lasersintern bereitzustellen, das die vorgenannten Nachteile des Standes der Technik nicht oder nur in geringerem Maße aufweist. Das Verfahren soll einfach und kostengünstig durchführbar sein und die erhaltenen Formkörper sollen insbesondere einen möglichst geringen Verzug (so genanntes "Curling") aufweisen.

Gelöst wird diese Aufgabe durch ein Verfahren zur Herstellung von Formkörpern durch selektives Lasersintern eines Sinterpulvers (SP), das ein Polyamid (P) und 0,1 bis 5 Gew.-% mindestens eines Additivs (A) enthält, bezogen auf das Gesamtgewicht des Sinterpulvers (SP), dadurch gekennzeichnet, dass das mindestens eine Additiv (A) ausgewählt ist aus der Gruppe bestehend Verbindungen der Formel (I)

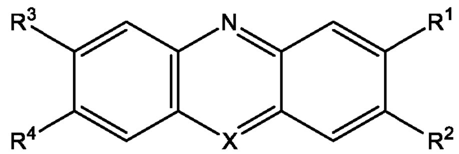

(I)

in der

$R^1$ und $R^2$ unabhängig voneinander ausgewählt sind aus der Gruppe bestehend aus H, $C_1$- bis $C_4$-Alkyl und $NR^5R^6$, wobei $R^5$ und $R^6$ unabhängig voneinander ausgewählt sind aus der Gruppe bestehend aus H und $C_1$- bis $C_4$-Alkyl,

$R^3$ und $R^4$ unabhängig voneinander ausgewählt sind aus der Gruppe bestehend aus H, $C_1$- bis $C_4$-Alkyl und $NR^9R^{10}$, wobei $R^9$ und $R^{10}$ unabhängig voneinander ausgewählt sind aus der Gruppe bestehend aus H und $C_1$- bis $C_4$-Alkyl,
X N, $S^+$ oder $N^+R^{13}$ bedeutet,
wobei $R^{13}$ ausgewählt ist aus der Gruppe bestehend aus H und $C_1$- bis $C_{10}$-Alkyl,
wobei die Verbindungen der Formel (I) eine positive Ladung aufweisen, wenn X $S^+$ oder $N^+R^{13}$ bedeutet und die Verbindungen der Formel (I) dann ein Anion $Y^-$ enthalten,
wobei $Y^-$ ausgewählt ist aus der Gruppe bestehend aus Hydroxid, Chlorid, Bromid, Iodid, Sulfat, Sulfit, Phosphat und Phosphit.

Es wurde überraschend festgestellt, dass ein Sinterpulver (SP), das ein Polyamid (P) und 0,1 bis 5 Gew.-% des mindestens einen Additivs (A) enthält, ein so weit verbreitertes Sinterfenster ($W_{SP}$) aufweist, dass der durch selektives Lasersintern des Sinterpulvers (SP) hergestellte Formkörper keinen oder einen deutlich reduzierten Verzug aufweist. Es wurde außerdem überraschend festgestellt, dass die nach dem erfindungsgemäßen Verfahren hergestellten Formkörper eine verbesserte Farbstabilität aufweisen.

Die erfindungsgemäß hergestellten Sinterpulver (SP) weisen zudem eine hohe Sphärizität auf und besitzen gleichmäßigere und glattere Oberflächen als die im Stand der Technik beschriebenen Sinterpulver. Dadurch wird während des Lasersinterprozesses ein gleichmäßigerer Schmelzfilm gebildet, was ebenfalls zu einem deutlich geringeren Verzug der Formkörper führt. Zudem werden dadurch Formkörper erhalten, deren Oberflächen besser definiert sind.

Vorteilhaft ist außerdem, dass bei der Herstellung des Formkörpers nicht aufgeschmolzenes Sinterpulver (SP) wiederverwendet werden kann. Das Sinterpulver (SP) besitzt auch nach mehreren Laser-Sinter-Zyklen ähnlich vorteilhafte Sintereigenschaften wie beim ersten Sinterzyklus.

*Selektives Lasersintern*

Das Verfahren des selektiven Lasersinterns ist dem Fachmann an sich beispielsweise aus der US 6,136,948 und der WO 96/06881 bekannt.

Beim Lasersintern wird eine erste Schicht eines sinterbaren Pulvers in einem Pulverbett angeordnet und mit einem Laserstrahl lokal und kurzzeitig belichtet. Dabei wird nur der Teil des sinterbaren Pulvers, der vom Laserstrahl belichtet worden ist, selektiv aufgeschmolzen (selektives Lasersintern). Das aufgeschmolzene sinterbare Pulver fließt ineinander und bildet so eine homogene Schmelze in dem belichteten Bereich. Im Anschluss kühlt der Bereich wieder ab und das sinterbare Pulver erstarrt wieder. Dann wird das Pulverbett um die Schichtdicke der ersten Schicht abgesenkt, eine zweite Schicht des sinterbaren Pulvers aufgebracht, mit dem Laser selektiv belichtet und aufgeschmolzen. Dadurch verbindet sich zum einen die obere zweite Schicht des sinterbaren Pulvers mit der unteren ersten Schicht, außerdem verbinden sich die Partikel des sinterbaren Pulvers innerhalb der zweiten Schicht durch das Aufschmelzen miteinander. Indem das Absenken des Pulverbetts, das Aufbringen des sinterbaren Pulvers und das Aufschmelzen des sinterbaren Pulvers wiederholt werden, können dreidimensionale Formkörper hergestellt werden. Durch die selektive Belichtung bestimmter Stellen mit dem Laserstrahl ist es möglich, Formkörper herzustellen, die beispielsweise auch Hohlräume aufweisen. Ein zusätzliches Stützmaterial ist nicht notwendig, da das nicht geschmolzene sinterbare Pulver selbst als Stützmaterial fungiert.

Als sinterbare Pulver eignen sich alle dem Fachmann bekannten Pulver, die durch Belichtung mit einem Laser aufgeschmolzen werden können. Beispiele für sinterbare Pulver sind das erfindungsgemäße Sinterpulver (SP) und das in dem Sinterpulver (SP) enthaltene Polyamid (P).

Die Begriffe "sinterbares Pulver" und "Sinterpulver (SP)" können im Rahmen der vorliegenden Erfindung synonym verwendet werden und besitzen dann die gleiche Bedeutung.

Geeignete Laser für das selektive Lasersintern sind beispielsweise Faserlaser, Nd:YAG-Laser (Neodym-dotierter Yttrium-Aluminium-Granat-Laser) und Kohlendioxidlaser.

Von besonderer Bedeutung bei dem selektiven Lasersinterverfahren ist der Schmelzbereich des sinterbaren Pulvers, das so genannte "Sinterfenster (W)". Ist das sinterbare Pulver das erfindungsgemäße Sinterpulver (SP), so wird im Rahmen der vorliegenden Erfindung das Sinterfenster (W) als "Sinterfenster ($W_{SP}$)" des Sinterpulvers (SP) bezeichnet. Ist das sinterbare Pulver das im Sinterpulver (SP) enthaltene Polyamid (P), so wird im Rahmen der vorliegenden Erfindung das Sinterfenster (W) als "Sinterfenster ($W_P$)" des Polyamids (P) bezeichnet.

Das Sinterfenster (W) eines sinterbaren Pulvers kann beispielsweise durch dynamische Differenzkalorimetrie (DDK; differential scanning calorimetry, DSC) bestimmt werden.

Bei der dynamischen Differenzkalorimetrie werden die Temperatur einer Probe, im vorliegenden Fall also eine Probe des sinterbaren Pulvers, und die Temperatur einer Referenz linear mit der Zeit geändert. Dazu werden der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge QR.

Geht die Probe eine endotherme Phasenumwandlung ein, muss eine zusätzliche Wärmemenge Q zugeführt

werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest), muss eine größere Wärmemenge Q abgeführt werden, um die Probe auf der gleichen Temperatur wie die Referenz zu halten, da bei der Kristallisation bzw. dem Erstarren Wärme frei wird. In dem DSC-Diagramm des Kühllaufs (K) wird dann ein Peak, der sogenannte Kristallisationspeak, in entgegengesetzter Richtung zu dem Aufschmelzpeak beobachtet.

Ein solches DSC-Diagramm mit einem Heizlauf (H) und einem Kühllauf (K) ist exemplarisch in Figur 1 dargestellt. Anhand des DSC-Diagramms können die Onset-Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset}$$

Im Rahmen der vorliegenden Erfindung haben die Begriffe "Sinterfenster (W)", "Größe des Sinterfensters (W)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Die Bestimmung des Sinterfensters ($W_{SP}$) des Sinterpulvers (SP) und die Bestimmung des Sinterfensters ($W_P$) des Polyamids (P) erfolgt wie vorstehend beschrieben. Als Probe wird dann zur Bestimmung des Sinterfensters ($W_{SP}$) des Sinterpulvers (SP) das Sinterpulver (SP) verwendet, zur Bestimmung des Sinterfensters ($W_P$) des Polyamids (P) wird das Polyamid (P) als Probe verwendet.

*Sinterpulver*

Das Sinterfenster ($W_{SP}$) des Sinterpulvers (SP) sollte möglichst groß sein, um eine vorzeitige Kristallisation bzw. ein vorzeitiges Erstarren der Schmelze während des selektiven Lasersinterns zu vermeiden, da dies zu einem Verzug des erhaltenen Formkörpers führen kann. Dieser Effekt wird auch als "Curling" bezeichnet.

In einer erfindungsgemäßen Ausführungsform liegt das Sinterfenster ($W_{SP}$) des Sinterpulvers (SP) bei mindestens 10 °C, bevorzugt bei mindestens 15 °C, besonders bevorzugt bei mindestens 20 °C und insbesondere bevorzugt bei mindestens 25 °C.

Das Sinterfenster (W) wird häufig auch in K (Kelvin) statt in °C (Grad Celsius) angegeben. Es gilt 1K = 1 °C.

In einer bevorzugten Ausführungsform weist das Sinterpulver (SP) ein Sinterfenster ($W_{SP}$) auf, das um mindestens 5 %, bevorzugt um mindestens 10 % und insbesondere bevorzugt um mindestens 20 % größer ist als das Sinterfenster ($W_P$) des Polyamids (P), das im Sinterpulver (SP) enthalten ist.

Gegenstand der vorliegenden Erfindung ist somit auch ein Verfahren, bei dem das Sinterpulver (SP) ein Sinterfenster ($W_{SP}$) aufweist und das im Sinterpulver (SP) enthaltene Polyamid (P) ein Sinterfenster ($W_P$) aufweist, wobei die Sinterfenster ($W_{SP}$; $W_P$) jeweils die Differenz zwischen der Onset-Temperatur des Aufschmelzens ($T_M^{onset}$) und der Onset-Temperatur der Kristallisation ($T_C^{onset}$) sind, und wobei das Sinterfenster ($W_{SP}$) des Sinterpulvers (SP) um mindestens 5 % größer ist als das Sinterfenster ($W_P$) des im Sinterpulver (SP) enthaltenen Polyamids (P).

Dies bedeutet, dass die Differenz ($\Delta W$) zwischen dem Sinterfenster ($W_{SP}$) des Sinterpulvers (SP) und dem Sinterfenster ($W_P$) des Polyamids (P), das im Sinterpulver (SP) enthalten ist, beispielsweise bei mindestens 3 °C, bevorzugt bei mindestens 5 °C und insbesondere bevorzugt bei mindestens 10 °C liegt.

Es gilt:

$$\Delta W = W_{SP} - W_P.$$

Die Differenz ($\Delta W$) zwischen dem Sinterfenster ($W_{SP}$) des Sinterpulvers (SP) und dem Sinterfenster ($W_P$) des Polyamids (P), das im Sinterpulver (SP) enthalten ist, liegt beispielsweise im Bereich von 3 bis 20 °C, bevorzugt im Bereich von 8 bis 20 °C und insbesondere bevorzugt im Bereich von 12 bis 20 °C.

Für das Sinterfenster ($W_{SP}$) des Sinterpulvers (SP) und das Sinterfenster ($W_P$) des Polyamids (P) sowie für deren Bestimmung gelten die zuvor beschriebenen Ausführungen und Bevorzugungen für das Sinterfenster (W) entsprechend.

Dem Fachmann ist klar, dass die Onset-Temperatur des Aufschmelzens ($T_M^{onset}$) und die Onset-Temperatur der Kristallisation ($T_C^{onset}$) sowohl des Sinterpulvers (SP) als auch des Polyamids (P) abhängig sind von der Art des Polyamids (P).

Beispielsweise liegt die Onset-Temperatur des Aufschmelzens ($T_M^{onset}$) des Polyamids (P) für Polyamid 6 (PA6) als Polyamid (P) im Bereich von 205 bis 215 °C, die Onset-Temperatur der Kristallisation ($T_C^{onset}$) des Polyamids (P) für PA6 als Polyamid (P) liegt im Bereich von 189 bis 192 °C. Somit liegt das Sinterfenster ($W_P$), das heißt die Differenz zwischen der Onset-Temperatur des Aufschmelzens ($T_M^{onset}$) und der Onset-Temperatur der Kristallisation ($T_C^{onset}$), des Polyamids (P) für PA6 als Polyamid (P) im Bereich von 14 bis 25 °C.

Beispielsweise liegt die Onset-Temperatur des Aufschmelzens ($T_M^{onset}$) des Sinterpulvers (SP) für PA6 als im Sinterpulver (SP) enthaltenes Polyamid (P) im Bereich von 205 bis 215 °C, die Onset-Temperatur der Kristallisation ($T_C^{onset}$) des Sinterpulvers (SP) für PA6 als im Sinterpulver (SP) enthaltenes Polyamid (P) liegt im Bereich von 173 bis 178 °C. Somit liegt das Sinterfenster ($W_{SP}$), das heißt die Differenz zwischen der Onset-Temperatur des Aufschmelzens ($T_M^{onset}$) und der Onset-Temperatur der Kristallisation ($T_C^{onset}$), des Sinterpulvers (SP) für PA6 als im Sinterpulver (SP) enthaltenes Polyamid (P) im Bereich von 32 bis 36 °C.

Beispielsweise liegt die Onset-Temperatur des Aufschmelzens ($T_M^{onset}$) des Polyamids (P) für Polyamid 6.10 (PA6.10) als Polyamid (P) im Bereich von 212 bis 215 °C, die Onset-Temperatur der Kristallisation ($T_C^{onset}$) des Polyamids (P) für PA6.10 als Polyamid (P) liegt im Bereich von 194 bis 196 °C. Somit liegt das Sinterfenster ($W_P$), das heißt die Differenz zwischen der Onset-Temperatur des Aufschmelzens ($T_M^{onset}$) und der Onset-Temperatur der Kristallisation ($T_C^{onset}$), des Polyamids (P) für PA6.10 als Polyamid (P) im Bereich von 16 bis 21 °C.

Beispielsweise liegt die Onset-Temperatur des Aufschmelzens ($T_M^{onset}$) des Sinterpulvers (SP) für PA6.10 als im Sinterpulver (SP) enthaltenes Polyamid (P) im Bereich von 211 bis 214 °C, die Onset-Temperatur der Kristallisation ($T_C^{onset}$) des Sinterpulvers (SP) für PA6.10 als im Sinterpulver (SP) enthaltenes Polyamid (P) liegt im Bereich von 187 bis 189 °C. Somit liegt das Sinterfenster ($W_{SP}$), das heißt die Differenz zwischen der Onset-Temperatur des Aufschmelzens ($T_M^{onset}$) und der Onset-Temperatur der Kristallisation ($T_C^{onset}$), des Sinterpulvers (SP) für PA6.10 als im Sinterpulver (SP) enthaltenes Polyamid (P) im Bereich von 22 bis 27 °C.

Beispielsweise liegt die Onset-Temperatur des Aufschmelzens ($T_M^{onset}$) des Polyamids (P) für Polyamid 6.6 (PA6.6) als Polyamid (P) im Bereich von 248 bis 250 °C, die Onset-Temperatur der Kristallisation ($T_C^{onset}$) des Polyamids (P) für PA6.6 als Polyamid (P) liegt im Bereich von 234 bis 236 °C. Somit liegt das Sinterfenster ($W_P$), das heißt die Differenz zwischen der Onset-Temperatur des Aufschmelzens ($T_M^{onset}$) und der Onset-Temperatur der Kristallisation ($T_C^{onset}$), des Polyamids (P) für PA6.6 als Polyamid (P) im Bereich von 12 bis 16 °C.

Beispielsweise liegt die Onset-Temperatur des Aufschmelzens ($T_M^{onset}$) des Sinterpulvers (SP) für PA6.6 als im Sinterpulver (SP) enthaltenes Polyamid (P) im Bereich von 246 bis 248 °C, die Onset-Temperatur der Kristallisation ($T_C^{onset}$) des Sinterpulvers (SP) für PA6.6 als im Sinterpulver (SP) enthaltenes Polyamid (P) liegt im Bereich von 224 bis 226 °C. Somit liegt das Sinterfenster ($W_{SP}$), das heißt die Differenz zwischen der Onset-Temperatur des Aufschmelzens ($T_M^{onset}$) und der Onset-Temperatur der Kristallisation ($T_C^{onset}$), des Sinterpulvers (SP) für PA6.6 als im Sinterpulver (SP) enthaltenes Polyamid (P) im Bereich von 20 bis 24 °C.

Die vorstehenden Ausführungsformen und Bevorzugungen gelten immer unter der Voraussetzung, dass die Onset-Temperatur des Aufschmelzens ($T_M^{onset}$) oberhalb der Onset-Temperatur der Kristallisation ($T_C^{onset}$) liegt, dass also gilt $T_M^{onset} > T_C^{onset}$.

Erfindungsgemäß enthält das Sinterpulver (SP) ein Polyamid (P) und 0,1 bis 5 Gew.-% mindestens eines Additivs (A) ausgewählt aus der Gruppe bestehend aus Verbindungen der Formel (I), bezogen auf das Gesamtgewicht des Sinterpulvers (SP).

Bevorzugt enthält das Sinterpulver (SP) 0,5 bis 2,5 Gew.-% des mindestens einen Additivs (A), und besonders

bevorzugt enthält das Sinterpulver (SP) 0,5 bis 1 Gew.-% des mindestens einen Additivs (A), jeweils bezogen auf das Gesamtgewichts des Sinterpulvers (SP).

Die Größe der Partikel des Sinterpulvers (SP) liegt erfindungsgemäß im Allgemeinen im Bereich von 10 bis 250 μm, bevorzugt von 30 bis 200 μm, besonders bevorzugt von 50 bis 120 μm, insbesondere bevorzugt von 50 bis 90 μm.

Gegenstand der vorliegenden Erfindung ist somit auch ein Verfahren, bei dem die Partikelgröße des Sinterpulvers (SP) im Bereich von 10 bis 250 μm liegt.

Die erfindungsgemäßen Sinterpulver (SP) weisen im Allgemeinen
einen D10-Wert im Bereich von 10 bis 30 μm,
einen D50-Wert im Bereich von 25 bis 70 μm und
einen D90-Wert im Bereich von 50 bis 150 μm
auf.

In einer bevorzugten Ausführungsform weisen die Sinterpulver (SP)
einen D10-Wert im Bereich von 20 bis 30 μm,
einen D50-Wert im Bereich von 40 bis 60 μm und
einen D90-Wert im Bereich von 80 bis 100 μm
auf.

Unter "D10-Wert" wird im Rahmen der vorliegenden Erfindung in diesem Zusammenhang die Partikelgröße verstanden, bei der 10 Vol.-% der Partikel bezogen auf das Gesamtvolumen der Partikel kleiner oder gleich dem D10-Wert sind und 90 Vol.-% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. In Analogie dazu wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol suspendiert und die Suspension vermessen. Die Bestimmung des D10-, D50- und D90-Wertes erfolgt mittels Laserbeugung unter Verwendung eines Mastersizers 2000 der Firma Malvern. Die Auswertung erfolgt mittels Fraunhoferbeugung.

Zur Herstellung des Sinterpulvers (SP) werden das Polyamid (P) und das mindestens eine Additiv (A) gemischt.

Nach dem Mischen können das Polyamid (P) und das mindestens eine Additiv (A) als separate Partikel nebeneinander im Sinterpulver (SP) vorliegen. In einer erfindungsgemäß bevorzugten Ausführungsform enthält das Polyamid (P) das mindestens eine Additiv (A). Anders ausgedrückt enthält in einer erfindungsgemäß bevorzugten Ausführungsform das Sinterpulver (SP) das Polyamid (P), das das mindestens eine Additiv (A) enthält. Das mindestens eine Additiv (A) kann gleichmäßig oder ungleichmäßig verteilt in den Partikeln des Polyamids (P) vorliegen. Ob das mindestens eine Additiv (A) gleichmäßig oder ungleichmäßig verteilt in den Partikeln des Polyamids (P) vorliegt, hängt von dem Herstellungsverfahren des Sinterpulvers (SP) ab. Darüber hinaus kann das mindestens eine Additiv (A) auf die Oberfläche der Partikel des Polyamids (P) aufgebracht sein.

Liegt das mindestens eine Additiv (A) gleichmäßig verteilt in den Partikeln des Polyamids (P) vor, so kann das mindestens eine Additiv (A) in den Partikeln des Polyamids (P) beispielsweise gelöst sein. Das mindestens eine Additiv (A) kann dann molekular dispers verteilt in den Partikeln des Polyamids (P) vorliegen. Ebenso kann das mindestens eine Additiv (A) dann fein verteilt in den Partikeln des Polyamids (P) vorliegen.
Wenn das mindestens eine Additiv (A) gleichmäßig verteilt in den Partikeln des Polyamids (P) vorliegt, liegt die Größe der Partikel des mindestens einen Additivs (A) beispielsweise im Bereich von 0,5 nm bis 1000 nm, bevorzugt im Bereich von 0,5 nm bis 500 nm, besonders bevorzugt im Bereich von 1 nm bis 250 nm.

Liegt das mindestens eine Additiv (A) ungleichmäßig verteilt in den Partikeln des Polyamids (P) vor, so kann das mindestens eine Additiv (A) ungelöst, beispielsweise partikulär in den Partikeln des Polyamids (P) vorliegen. Es ist auch möglich, dass das mindestens eine Additiv (A) an der Oberfläche der Partikel des Polyamids (P) anhaftet.

Wenn das mindestens eine Additiv (A) ungleichmäßig verteilt in den Partikeln des Polyamids (P) vorliegt, liegt die Größe der Partikel des mindestens einen Additivs (A) beispielsweise im Bereich von > 1000 nm bis 10000 nm, bevorzugt im Bereich von > 1000 nm bis 5000 nm, besonders bevorzugt im Bereich von 1500 nm bis 2500 nm.

Die Art der Verteilung des Additivs (A) in dem Polyamid (P) ist nicht erfindungswesentlich. Bevorzugt ist lediglich, dass das Additiv (A) in oder an den Partikeln des Polyamids (P) enthalten ist.

Zur Herstellung eines Sinterpulvers (SP), in dem das mindestens eine Additiv (A) verteilt in den Partikeln des Polyamids (P) vorliegt, eignen sich prinzipiell alle dem Fachmann bekannten Methoden.

Beispielsweise kann das mindestens eine Additiv (A) mit dem Polyamid (P) vermischt werden und zumindest das Polyamid (P) vor, während oder nach der Zugabe des mindestens einen Additivs (A) aufgeschmolzen werden. Das Mischen und/oder Aufschmelzen kann beispielsweise in einem Extruder erfolgen. Anschließend kann die Schmelze, die eine Mischung aus Polyamid (P) und dem mindestens einen Additiv (A) enthält, extrudiert werden. Nach Abkühlen

wird ein erstarrtes Polyamid-Additiv-Gemisch erhalten. Dieses Gemisch kann anschließend nach dem Fachmann bekannten Methoden beispielsweise vermahlen werden, um das Sinterpulver (SP) zu erhalten. Das Vermahlen kann beispielsweise in Sichtermühlen, in Gegenstrahlmühlen, in Kugelmühlen, in Hammermühlen, in Schwingmühlen oder in Rotormühlen erfolgen.

Es ist außerdem möglich, das Sinterpulver (SP) durch Fällung herzustellen. Dies ist bevorzugt. Dazu wird das Polyamid (P) mit einem Lösungsmittel (LM) gemischt und das Polyamid (P), gegebenenfalls unter Erwärmen, in dem Lösungsmittel (LM) gelöst, unter Erhalt einer Polyamidlösung (PL). Das Polyamid (P) kann teilweise oder vollständig in dem Lösungsmittel (LM) gelöst werden. Bevorzugt wird das Polyamid (P) vollständig in dem Lösungsmittel (LM) gelöst. Bevorzugt wird also eine Polyamidlösung (PL) erhalten, die das Polyamid (P) vollständig gelöst in dem Lösungsmittel (LM) enthält.

Das mindestens eine Additiv (A) wird zu der Mischung aus Polyamid (P) und Lösungsmittel (LM) gegeben. Der Zeitpunkt der Zugabe des mindestens einen Additivs (A) ist dabei unerheblich, die Zugabe erfolgt aber im Allgemeinen vor der Fällung des Sinterpulvers (SP). Das mindestens eine Additiv (A) kann zu dem Lösungsmittel (LM) gegeben werden bevor das Polyamid (P) mit dem Lösungsmittel (LM) vermischt wird. Ebenso ist es möglich, das mindestens eine Additiv (A) zu der Mischung aus Polyamid (P) und Lösungsmittel (LM) zu geben, bevor das Polyamid (P) in dem Lösungsmittel (LM) gelöst wird. Darüber hinaus ist es auch möglich, das mindestens eine Additiv (A) zu der Polyamidlösung (PL) zu geben.

Anschließend kann das Sinterpulver (SP) aus der Polyamidlösung (PL), die das mindestens eine Additiv (A) enthält, gefällt werden.

Die Fällung kann nach dem Fachmann bekannten Methoden erfolgen. So kann das Sinterpulver (SP) beispielsweise gefällt werden, indem die Polyamidlösung (PL), die das mindestens eine Additiv (A) enthält, abgekühlt wird, das Lösungsmittel (LM) aus der Polyamidlösung (PL), die das mindestens eine Additiv (A) enthält, abdestilliert wird oder ein Fällungsmittel (FM) zu der Polyamidlösung (PL), die das mindestens eine Additiv (A) enthält, gegeben wird. Bevorzugt wird das Sinterpulver (SP) gefällt, indem die die Polyamidlösung (PL), die das mindestens eine Additiv (A) enthält, abgekühlt wird.

Wird das Sinterpulver (SP) durch Abkühlen der Polyamidlösung (PL), die das mindestens eine Additiv (A) enthält, gefällt, so kann die Polyamidlösung (PL) während des Abkühlens beispielsweise gerührt werden, um besonders feine Sinterpulver (SP)-Partikel herzustellen.

In einer weiteren bevorzugten Ausführungsform wird das Sinterpulver (SP) durch Fällung mit einem Fällungsmittel (FM) hergestellt.

Dazu wird das Polyamid (P) zunächst mit einem Lösungsmittel (LM) gemischt und gegebenenfalls unter Erwärmen in dem Lösungsmittel (LM) gelöst, unter Erhalt einer Polyamidlösung (PL), die das mindestens eine Additiv (A) enthält.

Der Zeitpunkt der Zugabe des mindestens einen Additivs (A) ist nicht erfindungswesentlich. Erfindungswesentlich ist lediglich, dass die Polyamidlösung vor der Zugabe des Fällungsmittels (FM) das mindestens eine Additiv (A) enthält. Das mindestens eine Additiv (A) ist in einer bevorzugten Ausführungsform vor der Fällung ebenfalls im Lösungsmittel (LM) gelöst.

Als Lösungsmittel (LM) kann genau ein Lösungsmittel verwendet werden, ebenso ist es möglich zwei oder mehr Lösungsmittel als Lösungsmittel (LM) zu verwenden. Geeignete Lösungsmittel (LM) sind beispielsweise ausgewählt aus der Gruppe bestehend aus Alkoholen, Lactamen und Ketonen. Bevorzugt ist das Lösungsmittel (LM) ausgewählt aus der Gruppe bestehend aus Alkoholen und Lactamen.

Gegenstand der Erfindung ist auch ein Verfahren zur Herstellung des Sinterpulvers (SP), bei dem das Lösungsmittel (LM) ausgewählt ist aus der Gruppe bestehend aus Alkohol, Lactam und Keton.

Unter Lactam werden erfindungsgemäß zyklische Amide verstanden, die im Ring 3 bis 12 Kohlenstoffatome, bevorzugt 4 bis 6 Kohlenstoffatome aufweisen. Geeignete Lactame sind beispielsweise ausgewählt aus der Gruppe bestehend aus 3-Aminopropansäurelactam (β-Lactam; β-Propionlactam), 4-Aminobutansäurelactam (γ-Lactam; γ-Butyrolactam), 5-Aminopentansäurelactam (δ-Lactam; δ-Valerolactam), 6-Aminohexansäurelactam (ε-Lactam; ε-Caprolactam), 7-Aminoheptansäurelactam (ζ-Lactam; ζ-Heptanolactam), 8-Aminooktansäurelactam (η-Lactam; η-Oktanolactam), 9-Nonansäurelactam (θ-Lactam; θ-Nonanolactam), 10-Dekansäurelactam (ω-Dekanolactam), 11-Undekansäurelactam (ω-Undekanolactam) und 12-Dodekansäurelactam (ω-Dodekanolactam).

Die Lactame können unsubstituiert oder zumindest monosubstituiert sein. Für den Fall, dass zumindest monosubstituierte Lactame eingesetzt werden, können diese am Stickstoffatom und/oder an den Kohlenstoffatomen des Rings einen, zwei oder mehrere Substituenten tragen, die unabhängig voneinander ausgewählt sind aus der Gruppe bestehend aus $C_1$- bis $C_{10}$-Alkyl, $C_5$- bis $C_6$-Cycloalkyl und $C_5$- bis $C_{10}$-Aryl.

Als $C_1$- bis $C_{10}$-Alkylsubstituenten sind beispielsweise Methyl, Ethyl, Propyl, Isopropyl, n-Butyl, sec.-Butyl und tert.-Butyl geeignet. Ein geeigneter $C_5$- bis $C_6$-Cycloalkylsubstituent ist beispielsweise Cyclohexyl. Bevorzugte $C_5$- bis $C_{10}$-Arylsubstituenten sind Phenyl und Antranyl.

Bevorzugt werden unsubstituierte Lactame eingesetzt, wobei γ-Lactam (γ-Butyrolactam), δ-Lactam (δ-Valerolactam) und ε-Lactam (ε-Caprolactam) bevorzugt sind. Besonders bevorzugt sind δ-Lactam (δ-Valerolactam) und ε-Lactam (ε-Caprolactam), wobei ε-Caprolactam insbesondere bevorzugt ist.

Bevorzugt enthält das Lösungsmittel (LM) mindestens 55 Gew.-% Lactam, besonders bevorzugt mindestens 80 Gew.-% Lactam, insbesondere bevorzugt mindestens 90 Gew.-% Lactam, am meisten bevorzugt mindestens 98 Gew.-% Lactam, jeweils bezogen auf das Gesamtgewicht des Lösungsmittels (LM).

Weiterhin am meisten bevorzugt besteht das Lösungsmittel (LM) aus Lactam.

Es ist außerdem bevorzugt, dass das Lösungsmittel (LM) weniger als 45 Gew.-% Wasser enthält, besonders bevorzugt weniger als 20 Gew.-% Wasser, insbesondere bevorzugt weniger als 10 Gew.-% Wasser, am meisten bevorzugt weniger als 2 Gew.-% Wasser, jeweils bezogen auf das Gesamtgewicht des Lösungsmittels (LM).

Die Untergrenze des Wassergehalts des Lösungsmittels (LM) liegt im Allgemeinen im Bereich von 0 bis 0,5 Gew.-%, bevorzugt im Bereich von 0 bis 0,3 Gew.-%, besonders bevorzugt im Bereich von 0 bis 0,1 Gew.-%, jeweils bezogen auf das Gesamtgewicht des Lösungsmittels (LM).

Zum Zeitpunkt der Zugabe des mindestens einen Additivs (A) gelten die zuvor beschriebenen Ausführungen.

Sobald die Polyamidlösung (PL) das mindestens eine Additiv (A) enthält, kann das Sinterpulver (SP) durch Zugabe eines Fällungsmittels (FM) gefällt werden.

Als Fällungsmittel (FM) kann genau ein Fällungsmittel verwendet werden. Ebenso ist es möglich, zwei oder mehr Fällungsmittel als Fällungsmittel (FM) zu verwenden.

Geeignete Fällungsmittel (FM) sind dem Fachmann bekannt und beispielsweise ausgewählt aus der Gruppe bestehend aus Wasser, Methanol und Ethanol.

In einer bevorzugten Ausführungsform enthält das Fällungsmittel (FM) mindestens 50 Gew.-% Wasser, besonders bevorzugt mindestens 70 Gew.-% Wasser, insbesondere bevorzugt mindestens 80 Gew.-% Wasser, am meisten bevorzugt mindestens 90 Gew.-% Wasser, jeweils bezogen auf das Gesamtgewicht des Fällungsmittels (FM).

Gegenstand der vorliegenden Erfindung ist auch ein Verfahren zur Herstellung des Sinterpulvers (SP), bei dem das Fällungsmittel (FM) mindestens 50 % Wasser enthält, bezogen auf das Gesamtgewicht des Fällungsmittels (FM).

Weiterhin am meisten bevorzugt besteht das Fällungsmittel (FM) aus Wasser.

Das gefällte Sinterpulver (SP) liegt dann suspendiert in einer Lösung vor, die Lösungsmittel (LM) und Fällungsmittel (FM) enthält. Gegebenenfalls enthält die Lösung außerdem nicht ausgefälltes Polyamid (P) sowie gegebenenfalls das mindestens eine Additiv (A).

Das gefällte Sinterpulver (SP) kann nach dem Fachmann bekannten Methoden aus dieser Lösung abgetrennt werden, beispielsweise durch Dekantieren, Sieben, Filtrieren oder Zentrifugieren.

Gegenstand der vorliegenden Erfindung ist somit auch ein Verfahren zur Herstellung von Formkörpern durch selektives Lasersintern, bei dem das Sinterpulver (SP) hergestellt wird durch ein Verfahren umfassend die folgenden Schritte:

a) Lösen eines Polyamids (P) in einem Lösungsmittel (LM), wobei vor, während und/oder nach dem Lösen das mindestens eine Additiv (A) zugegeben wird unter Erhalt einer Polyamidlösung (PL), die das mindestens eine Additiv (A) enthält,

b) Zugabe eines Fällungsmittels (FM) zu der Polyamidlösung (PL), die das mindestens eine Additiv (A) enthält, aus Verfahrensschritt a) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

Gegenstand der vorliegenden Erfindung ist somit auch ein Verfahren zur Herstellung eines Sinterpulvers (SP) umfassend die folgenden Schritte:

a) Lösen eines Polyamids (P) in einem Lösungsmittel (LM), wobei vor, während und/oder nach dem Lösen das mindestens eine Additiv (A) zugegeben wird unter Erhalt einer Polyamidlösung (PL), die das mindestens eine Additiv (A) enthält,

b) Zugabe eines Fällungsmittels (FM) zu der Polyamidlösung (PL), die das mindestens eine Additiv (A) enthält, aus Verfahrensschritt a) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

Erfindungsgemäß bevorzugt ist die Zugabe des mindestens einen Additivs (A) vor Verfahrensschritt b).

Besonders bevorzugt wird das mindestens eine Additiv (A) vor, während und/oder nach dem Lösen und vor Verfahrensschritt b) zugegeben.

Das mindestens eine Additiv (A) wird in solchen Mengen zugegeben, dass das erhaltene Sinterpulver (SP) 0,1 bis 5 Gew.-%, bevorzugt 0,5 bis 2,5 Gew.-% und besonders bevorzugt 0,5 bis 1 Gew.-% des mindestens einen Additivs

(A) enthält, bezogen auf das Gesamtgewicht des Sinterpulvers (SP).

In einer weiteren bevorzugten Ausführungsform wird das Polyamid (P) in Verfahrensschritt a) mit einem Lösungsmittel (LM) gemischt und anschließend auf eine Temperatur ($T_1$) erwärmt, wobei vor, während und/oder nach dem Erwärmen das mindestens eine Additiv (A) zugegeben wird, wobei sich das Polyamid (P) in dem Lösungsmittel (LM) löst unter Erhalt einer Polyamidlösung (PL), die das mindestens eine Additiv (A) enthält.

Die Temperatur ($T_1$) liegt im Allgemeinen unterhalb der Siedetemperatur des Lösungsmittels (LM) und unterhalb der Schmelztemperatur des Polyamids (P). Bevorzugt liegt die Temperatur ($T_1$) mindestens 50 °C unterhalb der Siedetemperatur des Lösungsmittels (LM) und/oder der Schmelztemperatur des Polyamids (P), mehr bevorzugt mindestens 35 °C unterhalb der Siedetemperatur des Lösungsmittels (LM) und/oder der Schmelztemperatur des Polyamids (P), insbesondere bevorzugt mindestens 20 °C unterhalb der Siedetemperatur des Lösungsmittels (LM) und/oder der Schmelztemperatur des Polyamids (P), am meisten bevorzugt mindestens 20 °C unterhalb der Siedetemperatur des Lösungsmittels (LM) und/oder der Schmelztemperatur des Polyamids (P).

Die Temperatur ($T_1$) liegt außerdem im Allgemeinen oberhalb der Schmelztemperatur des Lösungsmittels (LM). Bevorzugt liegt die Temperatur ($T_1$) mindestens 5 °C oberhalb der Schmelztemperatur des Lösungsmittels (LM), besonders bevorzugt mindestens 10 °C oberhalb der Schmelztemperatur des Lösungsmittels (LM), insbesondere bevorzugt mindestens 30 °C oberhalb der Schmelztemperatur des Lösungsmittels (LM).

Sobald das mindestens eine Additiv (A) in der Polyamidlösung (PL) enthalten ist, kann die Polyamidlösung (PL), die das mindestens eine Additiv (A) enthält, auf eine Temperatur ($T_2$) abgekühlt werden.

Die Temperatur ($T_2$) liegt im Allgemeinen oberhalb der Schmelztemperatur des Lösungsmittels (LM). Bevorzugt liegt die Temperatur ($T_2$) mindestens 5 °C oberhalb der Schmelztemperatur des Lösungsmittels (LM), besonders bevorzugt mindestens 10 °C oberhalb der Schmelztemperatur des Lösungsmittels (LM), insbesondere bevorzugt mindestens 30 °C oberhalb der Schmelztemperatur des Lösungsmittels (LM).

Wenn die Polyamidlösung (PL), die das mindestens eine Additiv (A) enthält, auf die Temperatur ($T_2$) abgekühlt worden ist, wird das Fällungsmittel (FM) zugegeben und das Sinterpulver (SP) gefällt. Anschließend kann das Sinterpulver (SP) abgetrennt werden.

Es ist auch möglich, dass ein Teil des Sinterpulvers (SP) bereits während des Abkühlens auf die Temperatur ($T_2$) gefällt wird.

Gegenstand der vorliegenden Erfindung ist somit auch ein Verfahren zur Herstellung von Formkörpern durch selektives Lasersintern, bei dem das Sinterpulver (SP) hergestellt wird durch ein Verfahren umfassend die folgenden Schritte:

a) Erhitzen einer Mischung enthaltend ein Polyamid (P) und ein Lösungsmittel (LM) auf eine Temperatur ($T_1$), oberhalb der sich das Polyamid (P) in dem Lösungsmittel (LM) löst, wobei vor, während und/oder nach dem Erhitzen das mindestens eine Additiv (A) zugegeben wird unter Erhalt einer Polyamidlösung (PL), die das mindestens eine Additiv (A) enthält,

b) Abkühlen der in Verfahrensschritt a) erhaltenen Polyamidlösung (PL), die das mindestens eine Additiv (A) enthält, auf eine Temperatur ($T_2$) und nachfolgend Zugabe eines Fällungsmittels (FM) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

Gegenstand der vorliegenden Erfindung ist somit auch ein Verfahren zur Herstellung eines Sinterpulvers (SP) umfassend die folgenden Schritte:

a) Erhitzen einer Mischung enthaltend ein Polyamid (P) und ein Lösungsmittel (LM) auf eine Temperatur ($T_1$), oberhalb der sich das Polyamid (P) in dem Lösungsmittel (LM) löst, wobei vor, während und/oder nach dem Erhitzen das mindestens eine Additiv (A) zugegeben wird unter Erhalt einer Polyamidlösung (PL), die das mindestens eine Additiv (A) enthält,

b) Abkühlen der in Verfahrensschritt a) erhaltenen Polyamidlösung (PL), die das mindestens eine Additiv (A) enthält, auf eine Temperatur ($T_2$) und nachfolgend Zugabe eines Fällungsmittels (FM) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

In Bezug auf das Lösungsmittel (LM), die Zugabe des mindestens einen Additivs (A), das Fällungsmittel (FM) sowie die Abtrennung des Sinterpulvers (SP) gelten die zuvor beschriebenen Ausführungen und Bevorzugungen.

In einer insbesondere bevorzugten Ausführungsform wird das Polyamid (P) mit einem Lösungsmittel (LM) gemischt und auf eine Temperatur größer einer Trübungstemperatur ($T_T$) erwärmt, oberhalb der das Polyamid (P)

vollständig gelöst in dem in dem Lösungsmittel (LM) vorliegt unter Erhalt einer Polyamidlösung (PL), die das mindestens eine Additiv (A) enthält, wobei vor, während und/oder nach dem Erwärmen das mindestens eine Additiv (A) zugegeben wird.

Unter der Trübungstemperatur ($T_T$) wird die Temperatur verstanden bei und unterhalb der eine Trübung der Polyamidlösung (PL) erkennbar ist. Oberhalb der Trübungstemperatur ($T_T$) liegt das Polyamid (P) vollständig gelöst in dem Lösungsmittel (LM) vor.

Die Temperatur oberhalb der Trübungstemperatur ($T_T$), auf die die Polyamidlösung (PL) erwärmt wird, liegt im Allgemeinen unterhalb der Siedetemperatur des Lösungsmittels (LM) sowie unterhalb der Schmelztemperatur des Polyamids (P). Besonders bevorzugt wird die Mischung aus Polyamid (P) und Lösungsmittel (LM) auf eine Temperatur im Bereich von 10 bis 50 °C unterhalb der Siedetemperatur des Lösungsmittels (LM) und/oder der Schmelztemperatur des Polyamids (P), mehr bevorzugt auf eine Temperatur im Bereich von 10 bis 35 °C unterhalb der Siedetemperatur des Lösungsmittels (LM) und/oder der Schmelztemperatur des Polyamids (P) und insbesondere auf eine Temperatur im Bereich von 10 bis 20 °C unterhalb der Siedetemperatur des Lösungsmittels (LM) und/oder der Schmelztemperatur des Polyamids (P), erhitzt.

Sobald die Polyamidlösung (PL) das mindestens eine Additiv (A) enthält, kann die Polyamidlösung (PL) auf eine Temperatur unterhalb der Trübungstemperatur ($T_T$) abgekühlt werden. Bevorzugt wird die Polyamidlösung (PL), die das mindestens eine Additiv (A) enthält, auf eine Temperatur abgekühlt, die mindestens 0,5 °C, besonders bevorzugt mindestens 1 °C unter der Trübungstemperatur ($T_T$) liegt.

Die Temperatur unterhalb der Trübungstemperatur ($T_T$), auf die die Polyamidlösung (PL), die das mindestens eine Additiv (A) enthält, abgekühlt wird, liegt im Allgemeinen oberhalb der Schmelztemperatur des Lösungsmittels (LM). Bevorzugt liegt die Temperatur mindestens 5 °C oberhalb der Schmelztemperatur des Lösungsmittels (LM), besonders bevorzugt mindestens 10 °C oberhalb der Schmelztemperatur des Lösungsmittels (LM), insbesondere bevorzugt mindestens 30 °C oberhalb der Schmelztemperatur des Lösungsmittels (LM).

Nach Abkühlen der Polyamidlösung (PL), die das mindestens eine Additiv (A) enthält, auf eine Temperatur unterhalb der Trübungstemperatur ($T_T$) wird das Fällungsmittel (FM) zugegeben. Dabei fällt das Sinterpulver (SP) aus. Anschließend kann das Sinterpulver (SP) abgetrennt werden.

Es ist auch möglich, dass ein Teil des Sinterpulvers (SP) bereits beim Abkühlen der Polyamidlösung (PL), die das mindestens eine Additiv (A) enthält, ausfällt.

Gegenstand der vorliegenden Erfindung ist somit auch ein Verfahren zur Herstellung von Formkörpern durch selektives Lasersintern, bei dem das Sinterpulver (SP) hergestellt wird durch ein Verfahren umfassend die folgenden Schritte:

a) Erhitzen einer Mischung enthaltend ein Polyamid (P) und ein Lösungsmittel (LM) auf eine Temperatur größer der Trübungstemperatur ($T_T$), oberhalb der sich das Polyamid (P) vollständig in dem Lösungsmittel (LM) löst, wobei vor, während und/oder nach dem Erhitzen das mindestens eine Additiv (A) zugegeben wird unter Erhalt einer Polyamidlösung (PL), die das mindestens eine Additiv (A) enthält,

b) Abkühlen der in Verfahrensschritt a) erhaltenen Polyamidlösung (PL), die das mindestens eine Additiv (A) enthält, auf eine Temperatur kleiner/gleich der Trübungstemperatur ($T_T$) und nachfolgend Zugabe eines Fällungsmittels (FM) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

Gegenstand der vorliegenden Erfindung ist somit auch ein Verfahren zur Herstellung eines Sinterpulvers (SP) umfassend die folgenden Schritte:

a) Erhitzen einer Mischung enthaltend ein Polyamid (P) und ein Lösungsmittel (LM) auf eine Temperatur größer der Trübungstemperatur ($T_T$), oberhalb der sich das Polyamid (P) vollständig in dem Lösungsmittel (LM) löst, wobei vor, während und/oder nach dem Erhitzen das mindestens eine Additiv (A) zugegeben wird unter Erhalt einer Polyamidlösung (PL), die das mindestens eine Additiv (A) enthält,

b) Abkühlen der in Verfahrensschritt a) erhaltenen Polyamidlösung (PL), die das mindestens eine Additiv (A) enthält, auf eine Temperatur kleiner/gleich der Trübungstemperatur ($T_T$) und nachfolgend Zugabe eines Fällungsmittels (FM) unter Erhalt einer Suspension enthaltend das Sinterpulver (SP) suspendiert in einer Lösung, die das Lösungsmittel (LM) und das Fällungsmittel (FM) enthält,

c) Abtrennen des Sinterpulvers (SP) aus der in Verfahrensschritt b) erhaltenen Suspension.

In Bezug auf das Lösungsmittel (LM), die Zugabe des mindestens einen Additivs (A), das Fällungsmittel (FM), sowie die Abtrennung des Sinterpulvers (SP) gelten die zuvor beschriebenen Ausführungen und Bevorzugungen.

Gegenstand der vorliegenden Erfindung ist somit auch ein Verfahren zur Herstellung von Formkörpern durch

selektives Lasersintern, bei dem das Sinterpulver (SP) hergestellt wird durch ein Verfahren umfassend die folgenden Schritte:

a) Erhitzen einer Mischung enthaltend ein Polyamid (P) und ein Lactam auf eine Temperatur größer einer Trübungstemperatur ($T_T$), oberhalb der das Polyamid (P) vollständig gelöst in dem Lactam vorliegt, wobei vor, während und/oder nach dem Erhitzen das mindestens eine Additiv (A) zugegeben wird unter Erhalt einer Schmelze, die das Polyamid (P) vollständig gelöst in dem Lactam enthält,
b) Abkühlen der in Verfahrensschritt a) erhaltenen Schmelze auf eine Temperatur kleiner/gleich der Trübungstemperatur ($T_T$) und nachfolgend Zugabe von Wasser unter Erhalt einer Suspension enthaltend das Sinterpulver (SP) suspendiert in einer Lösung, die das Wasser und das Lactam enthält und
c) Abtrennen des Sinterpulvers (SP) aus der im Verfahrensschritt b) erhaltenen Suspension.

Gegenstand der vorliegenden Erfindung ist somit auch ein Verfahren zur Herstellung eines Sinterpulvers (SP) umfassend die folgenden Schritte:

a) Erhitzen einer Mischung enthaltend ein Polyamid (P) und ein Lactam auf eine Temperatur größer einer Trübungstemperatur ($T_T$), oberhalb der das Polyamid (P) vollständig gelöst in dem Lactam vorliegt, wobei vor, während und/oder nach dem Erhitzen das mindestens eine Additiv (A) zugegeben wird unter Erhalt einer Schmelze, die das Polyamid (P) vollständig gelöst in dem Lactam enthält,
b) Abkühlen der in Verfahrensschritt a) erhaltenen Schmelze auf eine Temperatur kleiner/gleich der Trübungstemperatur ($T_T$) und nachfolgend Zugabe von Wasser unter Erhalt einer Suspension enthaltend das Sinterpulver (SP) suspendiert in einer Lösung, die das Wasser und das Lactam enthält und
c) Abtrennen des Sinterpulvers (SP) aus der im Verfahrensschritt b) erhaltenen Suspension.

Durch die Fällung des Sinterpulvers (SP) mit einem Fällungsmittel (FM) werden besonders enge Partikelgrößenverteilungen erhalten. Es wurde außerdem überraschend festgestellt, dass Sinterpulver (SP), die gemäß diesem Verfahren hergestellt wurden, eine besonders hohe Sphärizität und gleichmäßige und glatte Oberflächen aufweisen und sich besonders gut zur Herstellung von Formkörpern mittels selektivem Lasersintern eignen, da sie sehr gleichmäßige Schmelzfilme ausbilden.

Eine hohe Sphärizität bedeutet, dass die Partikel eine besonders runde Form aufweisen. Als Maß hierfür wird der sogenannte Sphärizitäts-Wert (SPHT-Wert) herangezogen. Der Sphärizitäts-Wert der Partikel des Sinterpulvers (SP) gibt hierbei das Verhältnis der Oberfläche der Partikel des Sinterpulvers (SP) zu der Oberfläche von idealen Kugeln gleichen Volumens an. Der Sphärizitäts-Wert kann durch Bildanalyse beispielsweise mit Hilfe eines Camsizers ermittelt werden.

Die nach dem erfindungsgemäßen Verfahren erhältlichen Sinterpulver (SP) weisen im Allgemeinen einen Sphärizitätswert im Bereich von 0,4 bis 1,0 auf.

Ein Maß für die Breite der Partikelgrößenverteilung ist die Differenz des D90- und des D10-Werts (D90-Wert minus D10-Wert). Je enger diese beiden Werte zusammenliegen, das heißt, je geringer die Differenz ist, desto enger ist die Partikelgrößenverteilung.

Die nach dem oben beschriebenen Verfahren erhältlichen Sinterpulver (SP) weisen für die Differenz des D90- und D10-Werts allgemein Werte im Bereich von 10 bis 100 $\mu$m, bevorzugt im Bereich von 10 bis 50 $\mu$m auf.

Enge Partikelgrößenverteilungen können außerdem dadurch erhalten werden, dass die gemäß einem der oben genannten Verfahren hergestellten Partikel des Sinterpulvers (SP) gesiebt werden oder beispielsweise durch Windsichten nach ihrer Größe getrennt werden. Weitere Verfahren zur Trennung nach Partikelgrößen sind dem Fachmann als solche bekannt.

In einer weiteren bevorzugten Ausführungsform der vorliegenden Erfindung wird das Sinterpulver (SP) hergestellt, indem zunächst das Polyamid (P) in dem Lösungsmittel (LM) gelöst wird unter Erhalt einer Lösung. Das Lösen kann nach allen dem Fachmann bekannten Methoden erfolgen, beispielsweise wie vorstehend beschrieben, wobei allerdings bevorzugt das mindestens eine Additiv (A) nicht zugegeben wird. Anschließend wird das Polyamid (P) aus der Lösung gefällt und getrocknet unter Erhalt eines Pulvers des Polyamids (P). Zur Fällung eignen sich alle dem Fachmann bekannten Methoden, beispielsweise die zuvor für die Polyamidlösung (PL) beschriebenen.

Das erhaltene Pulver des Polyamids (P) wird dann mit einer Lösung des mindestens einen Additivs (A) in Kontakt gebracht und anschließend getrocknet unter Erhalt des Sinterpulvers (SP). Als Lösungsmittel in der Lösung des mindestens einen Additivs (A) eignen sich alle dem Fachmann bekannten Lösungsmittel, die das mindestens eine Additiv (A) lösen und die vorzugsweise das Polyamid (P) schlecht oder überhaupt nicht lösen, wie beispielsweise Wasser und/oder Alkohole. Zum Inkontaktbringen des Pulvers des Polyamids (P) mit der Lösung des mindestens einen Additivs (A) eignen sich ebenfalls alle dem Fachmann bekannten Methoden. Das Inkontaktbringen erfolgt üblicherweise bei Temperaturen im Bereich von 10 bis 30 °C.

Das Sinterpulver (SP) kann neben Polyamid (P) und dem mindestens einen Additiv (A) weitere Additive (B) enthalten. Zur Herstellung von Sinterpulvern (SP), die weitere Additive (B) enthalten, gelten die Ausführungen und Bevorzugungen im Hinblick auf Additiv (A) entsprechend.

Verfahren zur Herstellung von Sinterpulvern, die weitere Additive (B) enthalten, sind dem Fachmann als solche bekannt. Beispielsweise können die weiteren Additive (B) zusammen mit dem mindestens einen Additiv (A) wie oben beschrieben mit dem Polyamid (P) gemischt und/ oder gefällt werden.

Liegen die weiteren Additive (B) separat als einzelne Partikel neben den im Sinterpulver (SP) enthaltenen Polyamid (P)-Partikeln vor, ist es besonders bevorzugt, wenn die weiteren Additive (B) eine ähnliche Teilchengröße aufweisen wie die im Sinterpulver (SP) enthaltenen Polyamid (P)-Partikel. Unter "eine ähnliche Teilchengröße" wird erfindungsgemäß verstanden, dass die Teilchengröße nicht mehr als +/- 20 $\mu$m, bevorzugt nicht mehr als +/- 10 $\mu$m, besonders bevorzugt nicht mehr als +/- 5 $\mu$m von der Teilchengröße des Polyamids (P) abweicht.

Geeignete weitere Additive (B) sind beispielsweise ausgewählt aus der Gruppe bestehend aus anorganischen Pigmenten wie Übergangsmetalloxiden, Stabilisatoren wie Phenol, Talkum, Erdalkalisilicaten und Erdalkaliglycerophosphaten, Füllstoffen wie Glaskugeln, Glasfasern, Kohlefasern, Nanotubes und Kreide, schlagzäh modifizierten Polymeren, insbesondere solche auf Basis von Ethylenpropylen (EPM)- oder Ethylenpropylendien (EPDM)-Kautschuken oder thermoplastischen Polyurethanen, Flammschutzmitteln, Weichmachern und Haftvermittlern.

Das Sinterpulver (SP) kann 0 bis 20 Gew.-% weitere Additive (B) enthalten, bevorzugt enthält das Sinterpulver (SP) 0 bis 10 Gew.-% weitere Additive (B), insbesondere bevorzugt 0 bis 5 Gew.-% weitere Additive (B), jeweils bezogen auf das Gesamtgewicht des Sinterpulvers (SP).

Das Sinterpulver (SP) enthält im Allgemeinen

79,5 bis 99,5 Gew.-% Polyamid (P),
0,5 bis 2,5 Gew.-% des mindestens einen Additivs (A) und
gegebenenfalls 0 bis 20 Gew.-% weitere Additive (B),
wobei die Gew.-%-Angaben jeweils auf das Gesamtgewicht des Sinterpulvers (SP) bezogen sind.

Bevorzugt enthält das Sinterpulver (SP)

89,5 bis 99,5 Gew.-% Polyamid (P),
0,5 bis 2,0 Gew.-% des mindestens einen Additivs (A) und
0 bis 10 Gew.-% weitere Additive (B),
wobei die Gew.-%-Angaben jeweils auf das Gesamtgewicht des Sinterpulvers (SP) bezogen sind.

Besonders bevorzugt enthält das Sinterpulver (SP)

94,5 bis 99,5 Gew.-% Polyamid (P),
0,5 bis 2,0 Gew.-% des mindestens einen Additivs (A) und
0 bis 5 Gew.-% weitere Additive (B),
wobei die Gew.-%-Angaben jeweils auf das Gesamtgewicht des Sinterpulvers (SP) bezogen sind.

Insbesondere bevorzugt enthält das Sinterpulver (SP)
98,0 bis 99,5 Gew.-% Polyamid (P) und
0,5 bis 2,0 Gew.-% des mindestens einen Additivs (A),
wobei die Gew.-%-Angaben jeweils auf das Gesamtgewicht des Sinterpulvers (SP) bezogen sind.

Die Summe aus den Gew.-% des Polyamids (P), des mindestens einen Additivs (A) und der weiteren Additive (B) ergibt im Allgemeinen 100 Gew.-%.

*Polyamid*

Als Polyamid (P) kann genau ein Polyamid (P) eingesetzt werden. Es ist auch möglich, Mischungen aus zwei oder mehr Polyamiden (P) einzusetzen. Bevorzugt wird genau ein Polyamid (P) eingesetzt.

Geeignete Polyamide (P) weisen im Allgemeinen eine Viskositätszahl von 70 bis 350 ml/g, vorzugsweise von 70 bis 240 ml/g auf. Die Bestimmung der Viskositätszahl erfolgt erfindungsgemäß aus einer 0,5-gew.-%igen Lösung des Polyamids (P) in 96-gew.-%iger Schwefelsäure bei 25 °C gemäß ISO 307.

Als Polyamide (P) sind teilkristalline Polyamide bevorzugt. Geeignete Polyamide (P) weisen ein gewichtsmittleres Molekulargewicht ($M_w$) im Bereich von 500 bis 2 000 000 g/mol, bevorzugt im Bereich von 5 000 bis 500 000 g/mol und besonders bevorzugt im Bereich von 10000 bis 100000 g/mol, auf. Das gewichtsmittlere Molekulargewicht ($M_w$) wird bestimmt gemäß ASTM D4001.

Als Polyamide (P) sind beispielsweise Polyamide (P) geeignet, die sich von Lactamen mit 7 bis 13 Ringgliedern ableiten. Als Polyamide (P) sind weiterhin Polyamide (P) geeignet, die durch Umsetzung von Dicarbonsäuren mit Diaminen erhalten werden.

Als Polyamide (P), die sich von Lactamen ableiten, seien beispielhaft Polyamide erwähnt, die sich von Polycaprolactam, Polycapryllactam und/oder Polylaurinlactam ableiten.

Weiterhin geeignete Polyamide (P) sind erhältlich aus $\omega$-Aminoalkylnitrilen. Bevorzugtes $\omega$-Aminoalkylnitril ist

Aminocapronitril, das zu Polyamid 6 führt. Weiterhin können Dinitrile mit Diamin umgesetzt werden. Hierbei sind Adipodinitril und Hexamethylendiamin bevorzugt, deren Polymerisation zu Polyamid 66 führt. Die Polymerisation von Nitrilen erfolgt in Gegenwart von Wasser und wird auch als Direktpolymerisation bezeichnet.

Für den Fall, dass Polyamide (P) eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt 6 bis 12 Kohlenstoffatomen, und besonders bevorzugt 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophtalsäure als Dicarbonsäuren genannt.

Als Diamine eigenen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan und 2,2-Di-(4-aminocyclohexyl)-propan sowie 1,5-Diamino-2-methyl-pentan.

Bevorzugte Polyamide (P) sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactam-Einheiten.

Weiterhin sind Polyamide (P) geeignet, die durch Copolymerisation zweier oder mehrerer der vorstehend und nachstehend genannten Monomeren erhältlich sind, oder Mischungen mehrerer Polyamide (P), wobei das Mischungsverhältnis beliebig ist. Als Mischungen besonders bevorzugt sind Mischungen von Polyamid 66 mit anderen Polyamiden (P), insbesondere Copolyamid 6/66.

Geeignete Polyamide (P) sind somit aliphatische, teilaromatische oder aromatische Polyamide (P). Der Begriff "aliphatische Polyamide" bedeutet, dass die Polyamide (P) ausschließlich aus aliphatischen Monomeren aufgebaut sind. Der Begriff "teilaromatische Polyamide" bedeutet, dass die Polyamide (P) sowohl aus aliphatischen als auch aus aromatischen Monomeren aufgebaut sind. Der Begriff "aromatische Polyamide" bedeutet, dass die Polyamide (P) ausschließlich aus aromatischen Monomeren aufgebaut sind.

Die nachfolgende nicht abschließende Aufstellung enthält die vorstehend genannten sowie weitere Polyamide (P), die für den Einsatz im erfindungsgemäßen Verfahren geeignet sind, sowie die enthaltenen Monomere.

AB-Polymere:

| | |
|---|---|
| PA 4 | Pyrrolidon |
| PA 6 | ε-Caprolactam |
| PA 7 | Enantholactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin, Terephthalsäure |
| PA MXD6 | m-Xylyendiamin, Adipinsäure |

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |

| | |
|---|---|
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T und Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Gegenstand der vorliegenden Erfindung ist somit auch ein Verfahren, bei dem das Polyamid (P) mindestens ein Polyamid ist, ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T und Copolyamiden aus zwei oder mehreren der vorstehend genannten Polyamide.

Bevorzugt ist das Polyamid (P) mindestens ein Polyamid ausgewählt aus der Gruppe bestehend aus Polyamid 6 (PA 6), Polyamid 66 (PA 66), Polyamid 6/66 (PA 6/66), Polyamid 610 (PA 610), Polyamid 6/6T (PA 6/6T), Polyamid 12 (PA12) und Polyamid 1212 (PA1212).

Als Polyamid (P) besonders bevorzugt sind Polyamid 6 (PA 6) und/oder Polyamid 66 (PA 66), wobei Polyamid 6 (PA 6) insbesondere bevorzugt ist.

Gegenstand der vorliegenden Erfindung ist somit auch ein Verfahren, bei dem das Polyamid (P) mindestens ein Polyamid ausgewählt aus der Gruppe bestehend aus Polyamid 6 (PA 6), Polyamid 66 (PA 66), Polyamid 6/66 (PA 6/66), Polyamid 66/6 (PA 66/6), Polyamid 610 (PA 610), Polyamid 6/6T (PA 6/6T), Polyamid 12 (PA 12) und Polyamid 1212 (PA 1212) ist.

*Additiv (A)*

Das erfindungsgemäß eingesetzte mindestens eine Additiv (A) wird auch als anti-Nukleierungsmittel bezeichnet.

Erfindungsgemäß ist das mindestens eine Additiv (A) ausgewählt aus der Gruppe bestehend aus Verbindungen der Formel (I)

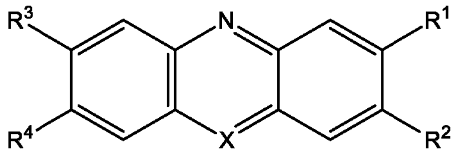

(I)

in der

| | |
|---|---|
| $R^1$ und $R^2$ | unabhängig voneinander ausgewählt sind aus der Gruppe bestehend aus H, $C_1$- bis $C_4$-Alkyl und $NR^5R^6$, wobei $R^5$ und $R^6$ unabhängig voneinander ausgewählt sind aus der Gruppe bestehend aus H und $C_1$- bis $C_4$-Alkyl, |
| $R^3$ und $R^4$ | unabhängig voneinander ausgewählt sind aus der Gruppe bestehend aus H, $C_1$- bis $C_4$-Alkyl und $NR^9R^{10}$, wobei $R^9$ und $R^{10}$ unabhängig voneinander ausgewählt sind aus der Gruppe bestehend aus H und $C_1$- bis $C_4$-Alkyl, |
| X | N, $S^+$ oder $N^+R^{13}$ bedeutet, wobei $R^{13}$ ausgewählt ist aus der Gruppe bestehend aus H und $C_1$- bis $C_4$-Alkyl, wobei die Verbindungen der Formel (I) eine positive Ladung aufweisen, wenn X $S^+$ oder $N^+R^{13}$ bedeutet und die Verbindungen der Formel (I) dann ein Anion $Y^-$ enthalten, wobei $Y^-$ ausgewählt ist aus der Gruppe bestehend aus Hydroxid, Chlorid, Bromid, Iodid, Sulfat, Sulfit, Phosphat und Phosphit. |

Dem Fachmann ist klar, dass, wenn die Verbindung der Formel (I) eine positive Ladung aufweist, das in der Formel (I) enthaltene Anion $Y^-$ im Allgemeinen die positive Ladung ausgleicht. Dies bedeutet beispielsweise, wenn die Verbindung der Formel (I) eine positive Ladung aufweist und das Anion $Y^-$ ist Chlorid, sich die positive Ladung der Formel (I) und die negative Ladung des Anions $Y^-$ gegenseitig ausgleichen. Wenn die Verbindung der Formel (I) eine positive Ladung aufweist und das Anion $Y^-$ ist beispielsweise Phosphat, so trägt das Anion eine dreifach negative Ladung. Eine der Ladungen gleicht die positive Ladung der Verbindung der Formel (I) aus, die übrigen beiden negativen Ladungen gleichen die positiven Ladungen von weiteren Verbindungen der Formel (I) aus. Dies ist dem Fachmann bekannt.

Gegenstand der vorliegenden Erfindung ist somit auch ein Verfahren, in dem dass X in Verbindungen der Formel (I) N, $S^+$ oder $N^+R^{13}$ bedeutet, wobei die Verbindungen der Formel (I) eine positive Ladung aufweisen, wenn X $O^+$, $S^+$ oder $N^+R^{13}$ bedeutet und die Verbindungen der Formel (I) dann ein Anion $Y^-$ enthalten, wobei $Y^-$ ausgewählt ist aus der Gruppe bestehend aus Hydroxid und Chlorid.

Im Rahmen der vorliegenden Erfindung wird unter Hydroxid $OH^-$ verstanden, unter Chlorid $Cl^-$, unter Bromid $Br^-$, unter Iodid $I^-$, unter Sulfat $SO_4^{2-}$, unter Sulfit $SO_3^{2-}$, unter Phosphat $PO_4^{3-}$ und unter Phosphit $PO_3^{3-}$.

Im Rahmen der vorliegenden Erfindung werden unter $C_1$- bis $C_{10}$-Alkyl aliphatische Kohlenwasserstoffreste mit 1 bis 10 Kohlenstoffatomen verstanden. Diese können verzweigt oder unverzweigt vorliegen. Aliphatische Kohlenwasserstoffreste mit 1 bis 10 Kohlenstoffatomen sind beispielsweise ausgewählt aus der Gruppe bestehend aus Methyl, Ethyl, Propyl, iso-Propyl, Butyl, iso-Butyl und tert-Butyl.

In einer Ausführungsform der vorliegenden Erfindung können die $C_1$- bis $C_{10}$-Alkyle außerdem substituiert sein. Geeignete Substituenten sind beispielsweise ausgewählt aus der Gruppe bestehend aus F, Cl, Br, OH, CN, $NH_2$ und $C_1$- bis $C_{10}$-Alkyl. Bevorzugt sind die $C_1$- bis $C_{10}$-Alkyle unsubstituiert.

Im Rahmen der vorliegenden Erfindung wird unter einem $C_6$- bis $C_{10}$-Aryl ein aromatisches Ringsystem mit 6 bis 10 Kohlenstoffen verstanden. Das aromatische Ringsystem kann monozyklisch oder bizyklisch sein. Beispiele für $C_6$- bis $C_{10}$-Aryle sind Phenyl und Naphthyl. Die $C_6$- bis $C_{10}$-Aryle können zudem substituiert sein. Geeignete Substituenten sind beispielsweise ausgewählt aus der Gruppe bestehend aus F, Cl, Br, OH, CN, $NH_2$ und $C_1$- bis $C_{10}$-Alkyl. Bevorzugt sind die $C_6$- bis $C_{10}$-Aryle unsubstituiert.

Bei der Verbindung der Formel (II) handelt es sich um einen Farbstoff, der auch als Methylenblau bezeichnet wird. Andere Namen sind N,N,N',N'-Tetramethylenthioninchlorid bzw. Basic Blue 9 (Colour Index 52015; CAS-Nummer 61-73-4 bzw. 122965-43-9).

Bei der Verbindung der Formel (III) handelt es sich um einen Farbstoff, der auch als Neutralrot bezeichnet wird. Neutralrot ist auch unter dem Namen 3-Amino-7-dimethylamino-2-methylphenazin Hydrochlorid bzw. Toluylenrot (Colour Index 50040; CAS-Nummer 553-24-2) bekannt.

In einer bevorzugten Ausführungsform ist das mindestens eine Additiv (A) ausgewählt aus der Gruppe bestehend aus Methylenblau und Neutralrot.

Gegenstand der vorliegenden Erfindung ist somit auch ein Verfahren, bei dem das mindestens eine Additiv (A) ausgewählt ist aus der Gruppe bestehend aus Methylenblau und Neutralrot.

In einer weiteren bevorzugten Ausführungsform ist das mindestens eine Additiv (A) ausgewählt aus der Gruppe bestehend aus Methylenblau und Neutralrot.

In einer weiteren bevorzugten Ausführungsform ist das mindestens eine Additiv (A) ausgewählt aus der Gruppe bestehend auf Methylenblau und Neutralrot.

In einer weiteren Ausführungsform ist das mindestens eine Additiv (A) ausgewählt aus der Gruppe bestehend aus Methylenblau und Neutralrot.

*Formkörper*

Die erfindungsgemäßen Formkörper werden durch das weiter oben beschriebene Verfahren des selektiven Lasersinterns erhalten.

Das bei der selektiven Belichtung mit dem Laser aufgeschmolzene Sinterpulver (SP) erstarrt nach der Belichtung wieder und bildet so die erfindungsgemäßen Formkörper. Die Formkörper können direkt nach dem Erstarren aus dem Pulverbett entnommen werden, ebenso ist es möglich, die Formkörper erst abzukühlen und dann erst aus dem Pulverbett zu entnehmen. Gegebenenfalls anhaftende Polymerpartikel können mechanisch nach bekannten Verfahren von der Oberfläche entfernt werden. Verfahren zur Oberflächenbehandlung der Formkörper umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln, indem die Formkörper beispielsweise lackiert werden.

Die erfindungsgemäßen Formkörper enthalten ein Polyamid (P) und 0,1 bis 5 Gew.-% mindestens eines Additivs (A), bevorzugt im Bereich von 0,5 bis 2,5 Gew.-% und insbesondere bevorzugt im Bereich von 0,5 bis 1 Gew.-% des mindestens einen Additivs (A), jeweils bezogen auf das Gesamtgewicht des Formkörpers. Erfindungsgemäß handelt es sich bei dem mindestens einen Additiv (A) um das mindestens eine Additiv (A), das im Sinterpulver (SP) enthalten war und bei dem Polyamid (P) um das Polyamid (P), das im Sinterpulver (SP) enthalten war.

Des Weiteren kann der Formkörper noch weitere Additive (B) enthalten. Bei den weiteren Additiven (B) handelt es sich um die weiteren Additive (B), die bereits im Sinterpulver (SP) enthalten waren.

In einer erfindungsgemäßen Ausführungsform enthält der Formkörper 0 bis 50 Gew.-% weitere Additive (B) bezogen auf das Gesamtgewicht des Formkörpers. In einer bevorzugten Ausführungsform enthält er 0 bis 30 Gew.-% weitere Additive (B), in einer besonders bevorzugten Ausführungsform enthält er 0 bis 20 Gew.-% weitere Additive (B), insbesondere bevorzugt enthält der Formkörper 0 bis 5 Gew.-% weitere Additive (B), jeweils bezogen auf das Gesamtgewicht des Formkörpers.

Gegenstand der vorliegenden Erfindung ist außerdem ein Verfahren zur Herstellung von Formkörpern durch selektives Lasersintern, bei dem das Sinterpulver (SP) durch das erfindungsgemäße Verfahren zur Herstellung eines Sinterpulvers (SP) hergestellt wird.

Für dieses Verfahren zur Herstellung von Formkörpern durch selektives Lasersintern gelten die zuvor beschriebenen Ausführungen und Bevorzugungen entsprechend.

Gegenstand der vorliegenden Erfindung ist somit auch ein Formkörper, erhältlich nach dem erfindungsgemäßen Verfahren.

*Beispiele*

Es wurden die folgenden Komponenten eingesetzt:

- Polyamid (P):

| | |
|---|---|
| (P1) Polyamid 12 | (PA2200, EOS) |
| (P2) Polyamid 6 | (Ultramid® B27, BASF SE) |
| (P3) Polyamid 6.10 | (Ultramid® S3k Balance, BASF SE) |
| (P4) Polyamid 6.6 | (Ultramid® A27, BASF SE) |

- Additiv (A):

| | |
|---|---|
| (A1) Nigrosin | (Orient Chemical) |
| (A2) Neutralrot | (3-Amino-7-dimethylamino-2-methylphenazin Hydrochlorid; Carl Roth) |
| (A3) Lithiumchlorid | |

Herstellung des Sinterpulvers

Tabelle 1 gibt an, ob das Sinterpulver durch Fällung oder durch Vermahlung hergestellt worden ist.

Bei den durch Vermahlung hergestellten Sinterpulvern wurden die in Tabelle 1 angegebenen Komponenten in dem in Tabelle 1 angegebenen Verhältnis in einem Zweischnecken-Extruder (ZSK 40) bei einer Drehzahl von 200 U/min, einer Zylindertemperatur von 240 °C und einem Durchsatz 50 kg/h compoundiert mit einer anschließenden Stranggranulierung. Das so erhaltene Granulat wurde kryogen vermahlen unter Erhalt des Sinterpulvers (SP).

Zur Herstellung des Sinterpulvers durch Fällung wurde das Polyamid (P) in den in Tabelle 1 angegebenen Mengen bei einer Temperaturrampe von 2 Stunden bei 120°C, 2 Stunden bei 160°C und 0,5 Stunden bei 175°C in einem Lösungsmittel bestehend aus 40 Gew.-% Caprolactam und 60 Gew.-% Wasser, jeweils bezogen auf das Gesamtgewicht des Lösungsmittels, gelöst und anschließend durch Abkühlung gefällt. Nach Wäsche mit Wasser und Trocknung wurde das Polyamid (P) als Pulver erhalten. Anschließend wurde das so erhaltene Pulver des Polyamids (P) mit einer Lösung des Additivs (A) in Kontakt gebracht, wobei das Polyamid (P) und das Additiv (A) in dem in Tabelle 1 angegebenen Verhältnis eingesetzt wurden. Als Lösungsmittel in der Lösung des Additivs (A) wurde für Nigrosin als Additiv (A) Ethanol eingesetzt, für Neutralrot oder Lithiumchlorid als Additiv (A) wurde Wasser eingesetzt. Nach dem Trocknen wurde das Sinterpulver (SP) erhalten.

Tabelle 1:

| Beispiel | (P1) [Gew.-%] | (P2) [Gew.-%] | (P3) [Gew.-%] | (P4) [Gew.-%] | (A1) [Gew.-%] | (A2) [Gew.-%] | (A3) [Gew.-%] | Herstellung |
|---|---|---|---|---|---|---|---|---|
| V1 | 100 | - | - | - | - | - | - | - |
| V2 | - | 100 | - | - | - | - | - | Vermahlung |
| V3 | - | 99,24 | - | - | 0,76 | - | - | Vermahlung |
| V4 | - | 97,5 | - | - | 2,5 | - | - | Vermahlung |
| V5 | - | 100 | - | - | - | - | - | Fällung |
| V6 | - | 100 | - | - | - | - | - | Fällung |
| V7 | - | 99,25 | - | - | 0,75 | - | - | Fällung |

(fortgesetzt)

| Beispiel | (P1) [Gew.-%] | (P2) [Gew.-%] | (P3) [Gew.-%] | (P4) [Gew.-%] | (A1) [Gew.-%] | (A2) [Gew.-%] | (A3) [Gew.-%] | Herstellung |
|---|---|---|---|---|---|---|---|---|
| B8 | - | 99,5 | - | - | - | 0,5 | - | Fällung |
| B9 | - | 99,75 | - | - | - | 0,25 | - | Fällung |
| B10 | - | 99,875 | - | - | - | 0,125 | - | Fällung |
| V11 | - | 99,75 | - | - | - | - | 0,25 | Fällung |
| V12 | - | - | 100 | - | - | - | - | - |
| V13 | - | - | 99,24 | - | 0,76 | - | - | Vermahlung |
| V14 | - | - | - | 100 | - | - | - | - |
| V15 | - | - | - | 99,24 | 0,76 | - | - | Vermahlung |

Es wurden die Onset-Temperatur des Aufschmelzens ($T_M^{onset}$) und die Onset-Temperatur der Kristallisation ($T_C^{onset}$) des Sinterpulvers bestimmt, wie für Figur 1 beschrieben. Daraus wurde das Sinterfenster (W) bestimmt.

Außerdem wurden Zugstäbe hergestellt, um den Verzug zu bestimmen.

Herstellung von Zugstäben

Die Sinterpulver wurden mit einer Schichtdicke von 0,1 mm in den Bauraum mit der in Tabelle 2 angegebenen Temperatur eingebracht. Anschließend wurde das Sinterpulver mit einem Laser, mit der in Tabelle 2 angegebenen Laserleistung und dem angegebenen Punktabstand belichtet, wobei die Geschwindigkeit des Lasers über der Probe beim Belichten bei dem in Tabelle 2 angegebenen Wert lag. Der Punktabstand wird auch als Laserbahnabstand oder als Spurabstand bezeichnet. Beim selektiven Lasersintern erfolgt das Scannen üblicherweise in Streifen. Der Punktabstand gibt den Abstand zwischen den Mitten der Streifen, also zwischen den beiden Zentren des Laserstrahls zweier Streifen, an.

Tabelle 2:

| Beispiel | Temperatur [°C] | Laserleistung [W] | Lasergeschwindigkeit [m/s] | Punktabstand [mm] |
|---|---|---|---|---|
| V1 | 171 | 11 | 5 | 0,15 |
| V2 | - | - | - | - |
| V3 | 200 | 20 | 5 | 0,25 |
| B4 | 194 | 25 | 5 | 0,15 |
| V5 | 201 | 23 | 5 | 0,2 |
| V6 | 202 | 25 | 5 | 0,2 |
| V7 | - | - | - | - |
| B8 | 208 | 15 | 5 | 0,15 |
| B9 | 208 | 15 | 5 | 0,15 |
| B10 | - | - | - | - |
| V11 | - | - | - | - |
| V12 | - | - | - | - |
| V13 | 202 | 20 | 5 | 0,15 |
| V14 | - | - | - | - |
| V15 | - | - | - | - |

Bestimmung des Verzugs

Zur Bestimmung des Verzugs der erhaltenen Sinterstäbe, wurde der Sinterstab mit der konkaven Seite auf eine planare Fläche gelegt. Anschließend wurde der Abstand ($a_m$) zwischen der planaren Fläche und dem oberen Rand der Mitte des Sinterstabes bestimmt. Zudem wurde die Dicke ($d_m$) in der Mitte des Sinterstabs bestimmt. Der Verzug in % bestimmt sich dann gemäß folgender Formel:

$$V=100 \cdot (a_m-d_m) / d_m$$

Die Dimension der Sinterstäbe lag üblicherweise bei 80 mm Länge, 10 mm Breite und 4 mm Dicke.
In Tabelle 3 sind die Ergebnisse der Messung des Sinterfensters (W) und des Verzugs angegeben.

Tabelle 3:

| Beispiel | $T_m^{onset}$ [°C] | $T_c^{onset}$ [°C] | Sinterfenster W [K] | Verzug [%] |
|---|---|---|---|---|
| V1 | 178,7 | 152,5 | 26,2 | - |
| V2 | 207,4 | 190,7 | 16,7 | 50 |
| V3 | 206,6 | 185,3 | 21,3 | 27 |
| B4 | 206,7 | 173,5 | 33,2 | 13 |
| V5 | 214,1 | 188,8 | 25,3 | - |
| V6 | 214,6 | 189,3 | 25,3 | - |
| V7 | 213,6 | 170,4 | 43,2 | - |
| B8 | 211,5 | 175,6 | 35,9 | - |
| B9 | 212,4 | 178,4 | 34,0 | - |
| V12 | 213,5 | 195,2 | 18,3 | |
| V13 | 212,6 | 187,9 | 24,7 | |

Anhand von Tabelle 3 ist deutlich zu erkennen, dass durch die Verwendung von mindestens einem Additiv (A) in dem Sinterpulver (SP) ein deutlich verbreitertes Sinterfenster erhalten wird. Zudem wird der Verzug deutlich reduziert.

**Patentansprüche**

1. Verfahren zur Herstellung von Formkörpern durch selektives Lasersintern eines Sinterpulvers (SP), das ein Polyamid (P) und 0,1 bis 5 Gew.-% mindestens eines Additivs (A) enthält, bezogen auf das Gesamtgewicht des Sinterpulvers (SP), **dadurch gekennzeichnet, dass** das mindestens eine Additiv (A) ausgewählt ist aus der Gruppe bestehend aus Verbindungen der Formel (I)

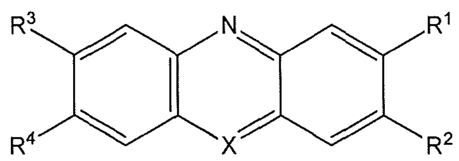

(I)

in der

$R^1$ und $R^2$ unabhängig voneinander ausgewählt sind aus der Gruppe bestehend aus H, $C_1$- bis $C_4$-Alkyl und $NR^5R^6$,
wobei $R^5$ und $R^6$ unabhängig voneinander ausgewählt sind aus der Gruppe bestehend aus H und $C_1$- bis $C_4$-Alkyl,
$R^3$ und $R^4$ unabhängig voneinander ausgewählt sind aus der Gruppe bestehend aus H, $C_1$- bis $C_4$-Alkyl und $NR^9R^{10}$,

wobei $R^9$ und $R^{10}$ unabhängig voneinander ausgewählt sind aus der Gruppe bestehend aus H und $C_1$- bis $C_4$-Alkyl,
X N, , $S^+$ oder $N^+R^{13}$ bedeutet,
wobei $R^{13}$ ausgewählt ist aus der Gruppe bestehend aus H und $C_1$- bis $C_4$-Alkyl,
wobei die Verbindungen der Formel (I) eine positive Ladung aufweisen, wenn X, $S^+$ oder $N^+R^{13}$ bedeutet und die Verbindungen der Formel (I) dann ein Anion $Y^-$ enthalten,
wobei $Y^-$ ausgewählt ist aus der Gruppe bestehend aus Hydroxid, Chlorid, Bromid, Iodid, Sulfat, Sulfit, Phosphat und Phosphit.

**2.** Verfahren gemäß Anspruch 1, **dadurch gekennzeichnet, dass** X in Verbindungen der Formel (I) N, , $S^+$ oder $N^+R^{13}$ bedeutet, wobei die Verbindungen der Formel (I) eine positive Ladung aufweisen, wenn X, $S^+$ oder $N^+R^{13}$ bedeutet und die Verbindungen der Formel (I) dann ein Anion $Y^-$ enthalten, wobei $Y^-$ ausgewählt ist aus der Gruppe bestehend aus Hydroxid und Chlorid.

**3.** Verfahren gemäß einem der Ansprüche 1 oder 2, **dadurch gekennzeichnet, dass** das mindestens eine Additiv (A) ausgewählt ist aus Methylenblau und Neutralrot.

**4.** Verfahren gemäß einem der Ansprüche 1 bis 3, **dadurch gekennzeichnet, dass** das Polyamid (P) mindestens ein Polyamid ist ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T und Copolyamiden aus zwei oder mehreren der vorstehend genannten Polyamide.

**5.** Verfahren gemäß einem der Ansprüche 1 bis 4, **dadurch gekennzeichnet, dass** das Polyamid (P) mindestens ein Polyamid ausgewählt aus der Gruppe bestehend aus Polyamid 6 (PA 6), Polyamid 66 (PA 66), Polyamid 6/66 (PA6/66), Polyamid 66/6 (PA66/6), Polyamid 610 (PA610), Polyamid 6/6T (PA6/6T), Polyamid 12 (PA 12) und Polyamid 1212 (PA 1212) ist.

**6.** Verfahren gemäß einem der Ansprüche 1 bis 5, **dadurch gekennzeichnet, dass** das Sinterpulver (SP) ein Sinterfenster ($W_{SP}$) aufweist und das im Sinterpulver (SP) enthaltene Polyamid (P) ein Sinterfenster ($W_P$) aufweist, wobei die Sinterfenster ($W_{SP}$; $W_P$) jeweils die Differenz zwischen der Onset-Temperatur des Aufschmelzens ($T_M^{onset}$) und der Onset-Temperatur der Kristallisation ($T_C^{onset}$) sind, und wobei das Sinterfenster ($W_{SP}$) des Sinterpulvers (SP) um mindestens 5 % größer ist als das Sinterfenster ($W_P$) des im Sinterpulver (SP) enthaltenen Polyamids (P).

**7.** Verfahren gemäß einem der Ansprüche 1 bis 5, **dadurch gekennzeichnet, dass** die Partikelgröße des Sinterpulvers (SP) im Bereich von 10 bis 250 $\mu$m liegt.

**8.** Verfahren zur Herstellung eines Sinterpulvers (SP) umfassend die folgenden Schritte:

a) Lösen eines Polyamids (P) in einem Lösungsmittel (LM), wobei vor, während und/oder nach dem Lösen das mindestens eine Additiv (A) zugegeben wird unter Erhalt einer Polyamidlösung (PL), die das mindestens eine Additiv (A) enthält,
b) Zugabe eines Fällungsmittels (FM) zu der Polyamidlösung (PL), die das mindestens eine Additiv (A) enthält, aus Verfahrensschritt a) unter Erhalt einer Suspension enthaltend das Sinterpulver (SP) suspendiert in einer Lösung, die das Lösungsmittel (LM) und das Fällungsmittel (FM) enthält,
c) Abtrennen des Sinterpulvers (SP) aus der in Verfahrensschritt b) erhaltenen Suspension.

**9.** Verfahren zur Herstellung eines Sinterpulvers (SP) umfassend die folgenden Schritte:

a) Erhitzen einer Mischung enthaltend ein Polyamid (P) und ein Lösungsmittel (LM) auf eine Temperatur größer der Trübungstemperatur ($T_T$), oberhalb der sich das Polyamid (P) vollständig in dem Lösungsmittel (LM) löst, wobei vor, während und/oder nach dem Erhitzen das mindestens eine Additiv (A) zugegeben wird unter Erhalt einer Polyamidlösung (PL), die das mindestens eine Additiv (A) enthält,
b) Abkühlen der in Verfahrensschritt a) erhaltenen Polyamidlösung (PL), die das mindestens eine Additiv (A) enthält, auf eine Temperatur kleiner/gleich der Trübungstemperatur ($T_T$) und nachfolgend Zugabe eines Fällungsmittels (FM) unter Erhalt einer Suspension enthaltend das Sinterpulver (SP) suspendiert in einer Lösung, die das Lösungsmittel (LM) und das Fällungsmittel (FM) enthält,
c) Abtrennen des Sinterpulvers (SP) aus der in Verfahrensschritt b) erhaltenen Suspension.

**10.** Verfahren gemäß einem der Ansprüche 8 oder 9, **dadurch gekennzeichnet, dass** das Lösungsmittel (LM) ausgewählt ist aus der Gruppe bestehend aus Alkohol, Lactam und Keton.

**11.** Verfahren gemäß einem der Ansprüche 8 bis 10, **dadurch gekennzeichnet, dass** das Fällungsmittel (FM) mindestens 50 % Wasser enthält, bezogen auf das Gesamtgewicht des Fällungsmittels (FM).

**12.** Verfahren zur Herstellung von Formkörpern durch selektives Lasersintern gemäß einem der Ansprüche 1 bis 7, **dadurch gekennzeichnet, dass** das Sinterpulver (SP) durch ein Verfahren gemäß einem der Ansprüche 8 bis 11 hergestellt wird.

**13.** Formkörper erhältlich nach einem Verfahren gemäß einem der Ansprüche 1 bis 7 und/oder 12.

**Claims**

**1.** A process for producing shaped bodies by selective laser sintering of a sinter powder (SP) comprising a polyamide (P) and 0.1% to 5% by weight of at least one additive (A), based on the total weight of the sinter powder (SP), wherein the at least one additive (A) is selected from the group consisting of compounds of the formula (I)

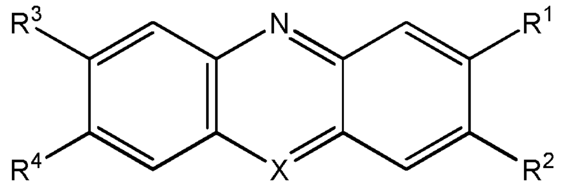

(I)

in which
$R^1$ and $R^2$ are independently selected from the group consisting of H, $C_1$- to $C_4$-alkyl and $NR^5R^6$,
where $R^5$ and $R^6$ are independently selected from the group consisting of H and $C_1$- to $C_4$-alkyl,
$R^3$ and $R^4$ are independently selected from the group consisting of H, $C_1$- to $C_4$-alkyl and $NR^9R^{10}$, where $R^9$ and $R^{10}$ are independently selected from the group consisting of H and $C_1$- to $C_4$-alkyl,
X is N, $S^+$ or $N^+R^{13}$,

where $R^{13}$ is selected from the group consisting of H and $C_1$- to $C_4$-alkyl,
where the compounds of the formula (I) have a positive charge when X is $S^+$ or $N^+R^{13}$ and the compounds of the formula (I) then comprise an anion $Y^-$,
where $Y^-$ is selected from the group consisting of hydroxide, chloride, bromide, iodide, sulfate, sulfite, phosphate and phosphite.

**2.** The process according to claim 1, wherein X in compounds of the formula (I) is N, $S^+$ or $N^+R^{13}$, where the compounds of the formula (I) have a positive charge when X is $S^+$ or $N^+R^{13}$ and the compounds of the formula (I) then comprise an anion $Y^-$, where $Y^-$ is selected from the group consisting of hydroxide and chloride.

**3.** The process according to either of claims 1 and 2, wherein the at least one additive (A) is selected from methylene blue and neutral red.

**4.** The process according to any of claims 1 to 3, wherein the polyamide (P) is at least one polyamide selected from the group consisting of PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 61, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T and copolyamides formed from two or more of the abovementioned polyamides.

**5.** The process according to any of claims 1 to 4, wherein the polyamide (P) is at least one polyamide selected from the group consisting of nylon-6 (PA 6), nylon-6,6 (PA 66), nylon-6/6,6 (PA 6/66), nylon-6,6/6 (PA 66/6), nylon-6,10 (PA 610), nylon-6/6T (PA 6/6T), nylon-12 (PA 12) and nylon-12,12 (PA 1212).

**6.** The process according to any of claims 1 to 5, wherein the sinter powder (SP) has a sintering window ($W_{SP}$) and the polyamide (P) present in the sinter powder (SP) has a sintering window ($W_P$), where the sintering windows ($W_{SP}$;

$W_P$) in each case are the difference between the onset temperature of the melting ($T_M^{onset}$) and the onset temperature of the crystallization ($T_C^{onset}$), and where the sintering window ($W_{SP}$) of the sinter powder (SP) is at least 5% larger than the sintering window ($W_P$) of the polyamide (P) present in the sinter powder (SP).

**7.** The process according to any of claims 1 to 5, wherein the particle size of the sinter powder (SP) is in the range from 10 to 250 μm.

**8.** A process for producing a sinter powder (SP), comprising the following steps:

a) dissolving a polyamide (P) in a solvent (S), with addition of the at least one additive (A) before, during and/or after the dissolution, to obtain a polyamide solution (PS) comprising the at least one additive (A),
b) adding a precipitant (PR) to the polyamide solution (PS) comprising the at least one additive (A) from process step a) to obtain a suspension comprising the sinter powder (SP) suspended in a solution comprising the solvent (S) and the precipitant (PR),
c) separating the sinter powder (SP) from the suspension obtained in process step b).

**9.** A process for producing a sinter powder (SP), comprising the following steps:

a) heating a mixture comprising a polyamide (P) and a solvent (S) to a temperature greater than the cloud temperature ($T_C$) above which the polyamide (P) dissolves completely in the solvent (S), with addition of the at least one additive (A) before, during and/or after the heating, to obtain a polyamide solution (PS) comprising the at least one additive (A),
b) cooling the polyamide solution (PS) which comprises the at least one additive (A) and has been obtained in process step a) to a temperature of not more than the cloud temperature ($T_C$) and subsequently adding a precipitant (PR) to obtain a suspension comprising the sinter powder (SP) suspended in a solution comprising the solvent (S) and the precipitant (PR),
c) separating the sinter powder (SP) from the suspension obtained in process step b).

**10.** The process according to either of claims 8 and 9, wherein the solvent (S) is selected from the group consisting of alcohol, lactam and ketone.

**11.** The process according to any of claims 8 to 10, wherein the precipitant (PR) comprises at least 50% water, based on the total weight of the precipitant (PR) .

**12.** The process for producing shaped bodies by selective laser sintering according to any of claims 1 to 7, wherein the sinter powder (SP) is produced by a process according to any of claims 8 to 11.

**13.** A shaped body obtainable by a process according to any of claims 1 to 7 and/or 12.

## Revendications

**1.** Procédé de fabrication de corps façonnés par frittage sélectif au laser d'une poudre de frittage (SP), qui contient un polyamide (P) et 0,1 à 5% en poids d'au moins un additif (A), par rapport au poids total de la poudre de frittage (SP), **caractérisé en ce que** ledit au moins un additif (A) est choisi dans le groupe constitué par des composés de formule (I)

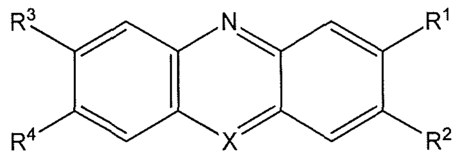

(I)

dans laquelle
$R^1$ et $R^2$ sont choisis, indépendamment l'un de l'autre, dans le groupe constitué par H, $C_1$-$C_4$-alkyle et $NR^5R^6$, $R^5$ et $R^6$ étant choisis, indépendamment l'un de l'autre dans le groupe constitué par H et $C_1$-$C_4$-alkyle,
$R^3$ et $R^4$ sont choisis, indépendamment l'un de l'autre, dans le groupe constitué par H, $C_1$-$C_4$-alkyle et $NR^9R^{10}$, $R^9$ et $R^{10}$ étant choisis, indépendamment l'un de l'autre dans le groupe constitué par H et $C_1$-$C_4$-alkyle,

X signifie N, $S^+$ ou $N^+R^{13}$, $R^{13}$ étant choisi dans le groupe constitué par H et $C_1$-$C_4$-alkyle, les composés de formule (I) présentant une charge positive lorsque X signifie $S^+$ ou $N^+R^{13}$ et les composés de formule (I) contenant alors un anion $Y^-$, $Y^-$ étant choisi dans le groupe constitué par hydroxyde, chlorure, bromure, iodure, sulfate, sulfite, phosphate et phosphite.

**2.** Procédé selon la revendication 1, **caractérisé en ce que** X dans les composés de formule (I) signifie N, $S^+$ ou $N^+R^{13}$, les composés de formule (I) présentant une charge positive lorsque X signifie $S^+$ ou $N^+R^{13}$ et les composés de formule (I) contenant alors un anion $Y^-$, $Y^-$ étant choisi dans le groupe constitué par hydroxyde et chlorure.

**3.** Procédé selon l'une quelconque des revendications 1 ou 2, **caractérisé en ce que** ledit au moins un additif (A) est choisi parmi le bleu de d'éthylène et le rouge neutre.

**4.** Procédé selon l'une quelconque des revendications 1 à 3, **caractérisé en ce que** le polyamide (P) est au moins un polyamide choisi dans le groupe constitué par PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T et les copolyamides de deux ou plus des polyamides susmentionnés.

**5.** Procédé selon l'une quelconque des revendications 1 à 4, **caractérisé en ce que** le polyamide (P) est au moins un polyamide choisi dans le groupe constitué par le polyamide 6 (PA 6), le polyamide 66 (PA 66), le polyamide 6/66 (PA 6/66), le polyamide 66/6 (PA 66/6), le polyamide 610 (PA 610), le polyamide 6/6T (PA 6/6T), le polyamide 12 (PA 12) et le polyamide 1212 (PA 1212).

**6.** Procédé selon l'une quelconque des revendications 1 à 5, **caractérisé en ce que** la poudre de frittage (SP) présente une fenêtre de frittage ($W_{SP}$) et le polyamide (P) contenu dans la poudre de frittage (SP) présente une fenêtre de frittage ($W_P$), les fenêtres de frittage ($W_{SP}$ ; $W_P$) étant à chaque fois la différence entre la température de démarrage de la fusion ($T_M^{onset}$) et la température de démarrage de la cristallisation ($T_C^{onset}$) et la fenêtre de frittage ($W_{SP}$) de la poudre de frittage (SP) étant supérieure d'au moins 5% à la fenêtre de frittage ($W_P$) du polyamide (P) contenu dans la poutre de frittage (SP).

**7.** Procédé selon l'une quelconque des revendications 1 à 5, **caractérisé en ce que** la grosseur de particule de la poudre de frittage (SP) se situe dans la plage de 10 à 250 $\mu$m.

**8.** Procédé pour la préparation d'une poudre de frittage (SP) comprenant les étapes suivantes :

a) dissolution d'un polyamide (P) dans un solvant (LM), au moins un additif (A) étant ajouté avant, pendant et/ou après la dissolution avec obtention d'une solution de polyamide (PL) qui contient ledit au moins un additif (A),
b) addition d'un agent de précipitation (FM) à la solution de polyamide (PL), qui contient ledit au moins un additif (A), de l'étape de procédé a) avec obtention d'une suspension contenant la poudre de frittage (SP) en suspension dans une solution qui contient le solvant (LM) et l'agent de précipitation (FM),
c) séparation de la poudre de frittage (SP) de la suspension obtenue dans l'étape de procédé b).

**9.** Procédé pour la préparation d'une poudre de frittage (SP) comprenant les étapes suivantes :

a) chauffage d'un mélange contenant un polyamide (P) et un solvant (LM) à une température supérieure à la température de trouble ($T_T$), au-dessus de laquelle le polyamide (P) se dissout complètement dans le solvant (LM), ledit au moins un additif (A) étant ajouté avant, pendant et/ou après le chauffage avec obtention d'une solution de polyamide (PL), qui contient ledit au moins un additif (A),
b) refroidissement de la solution de polyamide (PL), qui contient ledit au moins un additif (A), obtenue dans l'étape de procédé a) à une température inférieure/égale à la température de trouble ($T_T$) et addition consécutive d'un agent de précipitation (FM) avec obtention d'une suspension contenant la poudre de frittage (SP) en suspension dans une solution qui contient le solvant (LM) et l'agent de précipitation (FM),
c) séparation de la poudre de frittage (SP) de la suspension obtenue dans l'étape de procédé b).

**10.** Procédé selon l'une quelconque des revendications 8 ou 9, **caractérisé en ce que** le solvant (LM) est choisi dans le groupe constitué par un alcool, un lactame et une cétone.

**11.** Procédé selon l'une quelconque des revendications 8 à 10, **caractérisé en ce que** l'agent de précipitation (FM)

contient au moins 50% d'eau par rapport au poids total de l'agent de précipitation (FM).

**12.** Procédé pour la fabrication de corps façonnés par frittage sélectif au laser selon l'une quelconque des revendications 1 à 7, **caractérisé en ce que** la poudre de frittage (SP) est préparée par un procédé selon l'une quelconque des revendications 8 à 11.

**13.** Corps façonné, pouvant être obtenu selon un procédé selon l'une quelconque des revendications 1 à 7 et/ou 12.

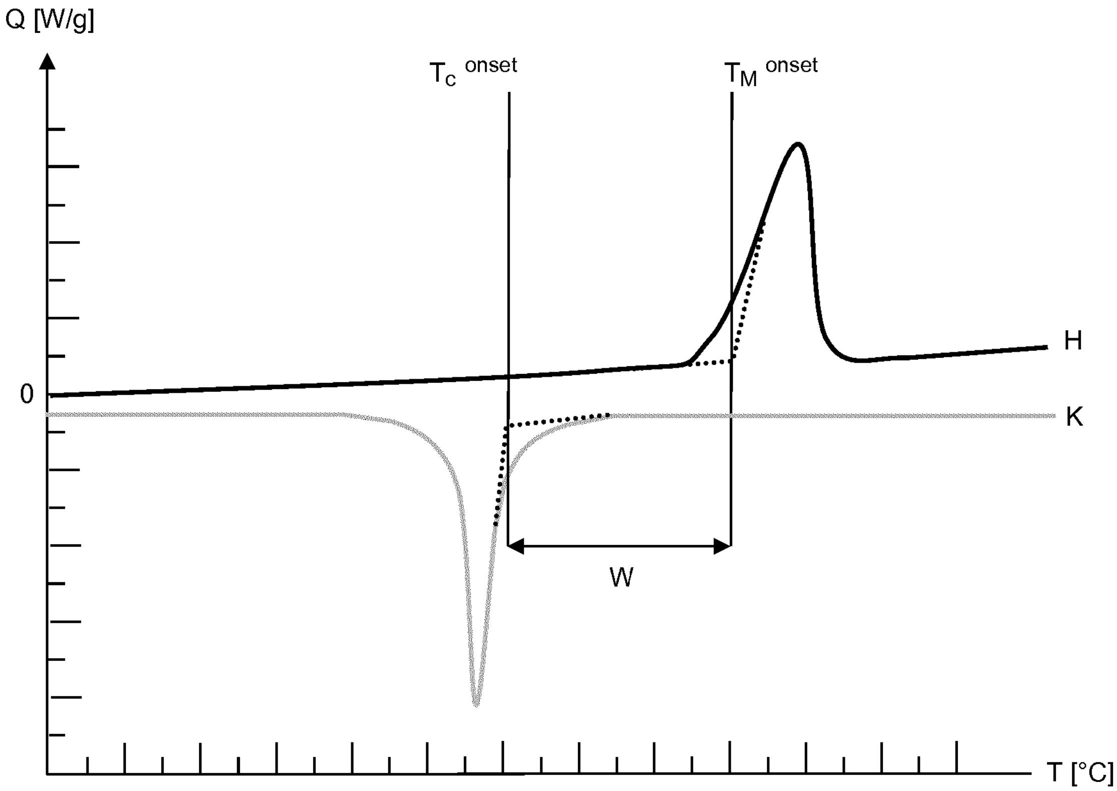


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6136948 A
- WO 9606881 A
- EP 0911142 A1
- WO 2012041793 A
- US 6395809 B1